(19) **Europäisches Patentamt European Patent Office Office européen des brevets**

(11) **EP 4 233 006 B1**

(12) **EUROPEAN PATENT SPECIFICATION**

(45) Date of publication and mention of the grant of the patent:
**19.11.2025 Bulletin 2025/47**

(21) Application number: **20853575.7**

(22) Date of filing: **14.12.2020**

(51) International Patent Classification (IPC):
**G06T 9/00** (2006.01)

(52) Cooperative Patent Classification (CPC):
**G06T 9/001**

(86) International application number:
**PCT/RU2020/000685**

(87) International publication number:
**WO 2022/131946 (23.06.2022 Gazette 2022/25)**

(54) **DEVICES AND METHODS FOR SPATIAL QUANTIZATION FOR POINT CLOUD COMPRESSION**

GERÄTE UND METHODEN FÜR DIE ÖRTLICHE QUANTISIERUNG EINER PUNKTWOLKENKOMPRIMIERUNG

APPAREILS ET MÉTHODES POUR LA QUANTIFICATION SPATIALE FAISANT PARTIE D'UNE COMPRESSION D'UN NUAGE À POINTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietor: **Huawei Technologies Co., Ltd. Shenzhen, Guangdong 518129 (CN)**

(72) Inventors:
- **RUFITSKIY, Vasily Alexeevich Shenzhen Guangdong, 518129 (CN)**
- **FILIPPOV, Alexey Konstantinovich Shenzhen Guangdong, 518129 (CN)**

(74) Representative: **MERH-IP Matias Erny Reichl Hoffmann Patentanwälte PartG mbB Paul-Heyse-Straße 29 80336 München (DE)**

(56) References cited:
- **FLYNN (APPLE) D ET AL: "G-PCC: Geometry octree QP constraints", no. m53682, 16 April 2020 (2020-04-16), XP030287362, Retrieved from the Internet <URL:http://phenix.int-evry.fr/mpeg/doc_end_user/documents/130_Alpbach/wg11/m53682-v1-m53682_v1.zip m53682.pdf> [retrieved on 20200416]**
- **XIANG ZHANG (TENCENT) ET AL: "[G-PCC][New proposal] Signaling delta QPs for adaptive geometry quantization in point cloud coding", no. m49232, 4 July 2019 (2019-07-04), XP030207496, Retrieved from the Internet <URL:http://phenix.int-evry.fr/mpeg/doc_end_user/documents/127_Gothenburg/wg11/m49232-v1-m49232-adaptive_geometry_quantization_G-PCC.zip m49232_[G-PCC][New proposal]Signaling delta QP for adaptive geometry quantization in point cloud coding.docx> [retrieved on 20190704]**
- **"G-PCC codec description", no. n19525, 10 October 2020 (2020-10-10), XP030292244, Retrieved from the Internet <URL:https://dms.mpeg.expert/doc_end_user/documents/131_OnLine/wg11/w19525.zip w19525.docx> [retrieved on 20201010]**

EP 4 233 006 B1

- **SAM S. TSAI ET AL: "Location coding for mobile image retrieval", PROCEEDINGS OF THE 5TH INTERNATIONAL MOBILE MULTIMEDIA COMMUNICATIONS CONFERENCE, 1 January 2009 (2009-01-01), XP055026047, ISBN: 978-9-63-979962-2, DOI: 10.4108/ ICST.MOBIMEDIA2009.7406**

- **JIE CHEN ET AL: "Multi-stage vector quantization towards low bit rate visual search", IMAGE PROCESSING (ICIP), 2012 19TH IEEE INTERNATIONAL CONFERENCE ON, IEEE, 30 September 2012 (2012-09-30), pages 2445 - 2448, XP032333694, ISBN: 978-1-4673-2534-9, DOI: 10.1109/ICIP.2012.6467392**

# EP 4 233 006 B1

**Description**

<u>TECHNICAL FIELD</u>

The present disclosure relates to image processing in general. More specifically, the disclosure relates to an encoding apparatus and method for encoding a point cloud and a decoding apparatus and method for decoding, i.e. reconstructing a point cloud with spatial quantization.

<u>BACKGROUND</u>

Point clouds have been considered as a candidate format for transmission, in particular, of two-dimensional (2D) or three-dimensional (3D) data, either captured by 3D scanners, LIDAR sensors, or used in popular applications such as Virtual Reality/Augmented Reality (VR/AR). Point clouds are a set of points in space. Besides the spatial position, each point usually has associated attributes, such as color or even reflectance and temporal timestamps. In order to obtain a high fidelity representation of the target objects, devices capture point clouds in the order of thousands or even millions of points. Moreover, for dynamic scenes used, for instance, in VR/AR applications, every single frame often has a unique dense point cloud, which results in the transmission of several millions of point clouds per second. For a viable transmission of such a large amount of data, compression is often applied.

Often the positions of the points of a point cloud do not have integer coordinate values, because the points being compressed, as described above, may have been generated by visual search algorithms or by real-world 3D capturing (e.g., by means of 3D scanners, such as radar or lidar devices). These non-integer point positions could represent positions of some vertices of a 3D object and have correspondence with real-world length units (e.g. meters, centimeters, millimeters, etc.). Hence, the positions of the points of a point cloud may have fractional parts, wherein the size of these fractional parts usually depends on the accuracy that is required by a specific application.

<u>SUMMARY</u>

It is an object of the invention to provide devices and methods for encoding and decoding a point cloud with an improved efficiency.

The foregoing and other objects are achieved by the subject matter of the independent claims. Further implementation forms are apparent from the dependent claims, the description and the figures.

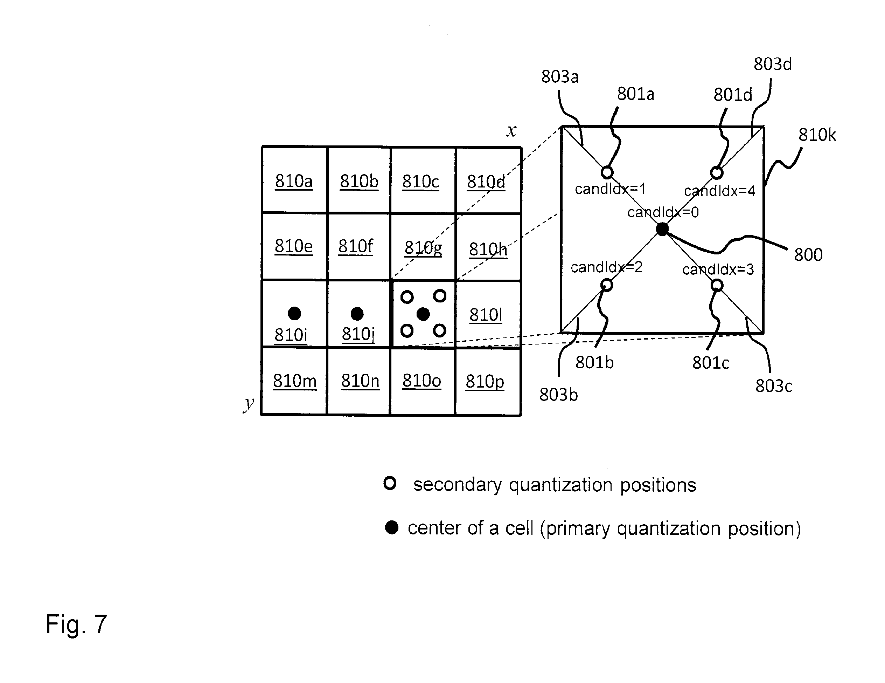

The invention is about the coding and decoding of a primary quantization position and at least a secondary quantization position in a quantization cell of a point cloud in accordance with figures 7-11 of the present application.

Details of one or more embodiments are set forth in the accompanying drawings and the description below. Other features, objects, and advantages will be apparent from the description, drawings, and claims.

<u>BRIEF DESCRIPTION OF THE DRAWINGS</u>

In the following embodiments of the invention are described in more detail with reference to the attached figures and drawings, in which:

Figure 1 is a schematic diagram illustrating a point cloud encoding apparatus and decoding apparatus according to an embodiment;

Figure 2 is a schematic diagram illustrating further details of the encoding apparatus according to an embodiment;

Figure 3 is a schematic diagram illustrating further details of the decoding apparatus according to an embodiment;

Figure 4 is a schematic diagram of a 2D quantization cell;

Figure 5 is a schematic diagram illustrating the mapping of points within a 2D quantization cell;

Figure 6 is a schematic diagram of a plurality of 2D quantization cells;

Figure 7 is schematic diagram of a plurality of 2D quantization cells, including a 2D quantization cell implemented by an encoding apparatus and a decoding apparatus according to an embodiment;

Figure 8 is a schematic diagram illustrating further details of a 2D quantization cell implemented by an encoding

3

apparatus and a decoding apparatus according to an embodiment;

Figure 9 is a schematic diagram illustrating further details of a 2D quantization cell implemented by an encoding apparatus and a decoding apparatus according to an embodiment;

Figure 10 is a flow diagram illustrating processing steps implemented by a decoding apparatus according to an embodiment;

Figure 11 is schematic diagram of a 3D quantization cell implemented by an encoding apparatus and a decoding apparatus according to an embodiment;

Figure 12 is a flow diagram illustrating processing steps implemented by a decoding apparatus according to an embodiment;

Figure 13 is schematic diagram of a plurality of 2D quantization cells implemented by an encoding apparatus and a decoding apparatus according to an embodiment;

Figure 14 is schematic diagram of a plurality of 2D quantization cells implemented by an encoding apparatus and a decoding apparatus according to an embodiment;

Figure 15 is a flow diagram illustrating a point cloud encoding method according to an embodiment; and

Figure 16 is a flow diagram illustrating a point cloud decoding method according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.
For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

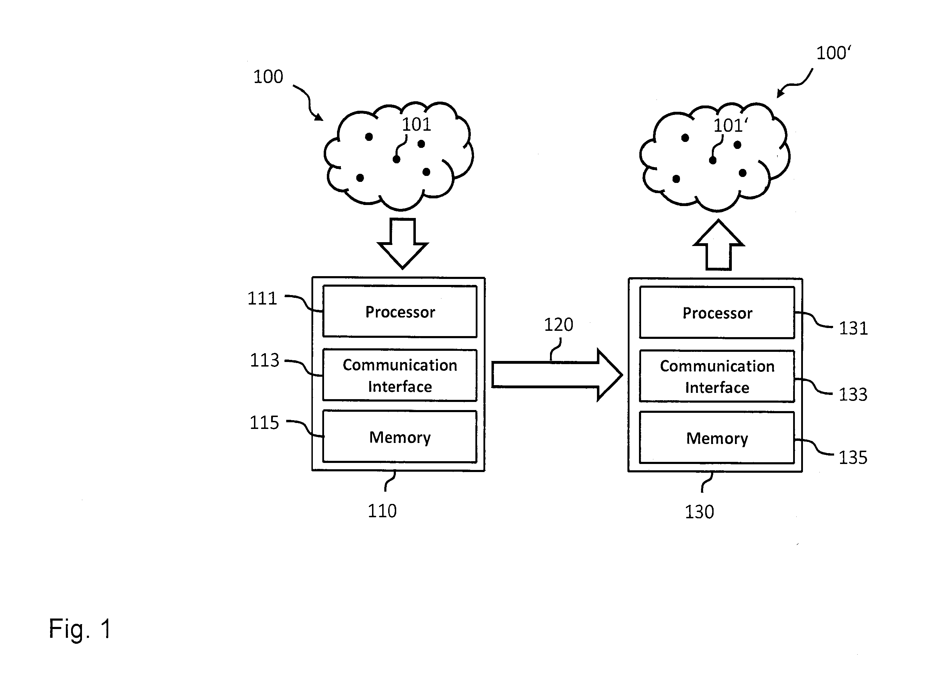

Figure 1 shows an encoding apparatus 110 and a decoding apparatus 130 according to an embodiment. The encoding apparatus 110 is configured to encode, i.e. compress a point cloud 100 with a plurality of points 101 into a bitstream 120. Each of the plurality of points 101 of the point cloud 100 may be associated with a position, e.g. 2D or 3D coordinates and one or more attributes. The bitstream 120 may comprise a geometry bitstream 120a and an attribute bitstream 120b. The decoding apparatus 130 is configured to decode, i.e. decompress the bitstream into a reconstructed point cloud 110' comprising a plurality of reconstructed points 101'.
As illustrated in figure 1, the encoding apparatus 110 comprises a processing circuitry or processor 111 for encoding the point cloud 100 into the bitstream 120. The processor 111 may be implemented in hardware and/or software, which when executed causes the encoding apparatus 110 to perform the functions and methods described herein. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. Moreover, the encoding apparatus 110 may comprise a communication interface 113, such as a wireless communication interface 113 for transmitting the bitstream 120 to the decoding apparatus 130 as well as an electronic memory 115 for storing data, in particular the bitstream 120. Likewise, the decoding apparatus 130

comprises a processing circuitry or processor 131 for reconstructing the point cloud 100' based on the bitstream 120. Moreover, the decoding apparatus 130 may comprise a communication interface 133, such as a wireless communication interface 133 for receiving the bitstream 120 from the encoding apparatus 110 as well as an electronic memory 135 for storing data, in particular the reconstructed point cloud 100'.

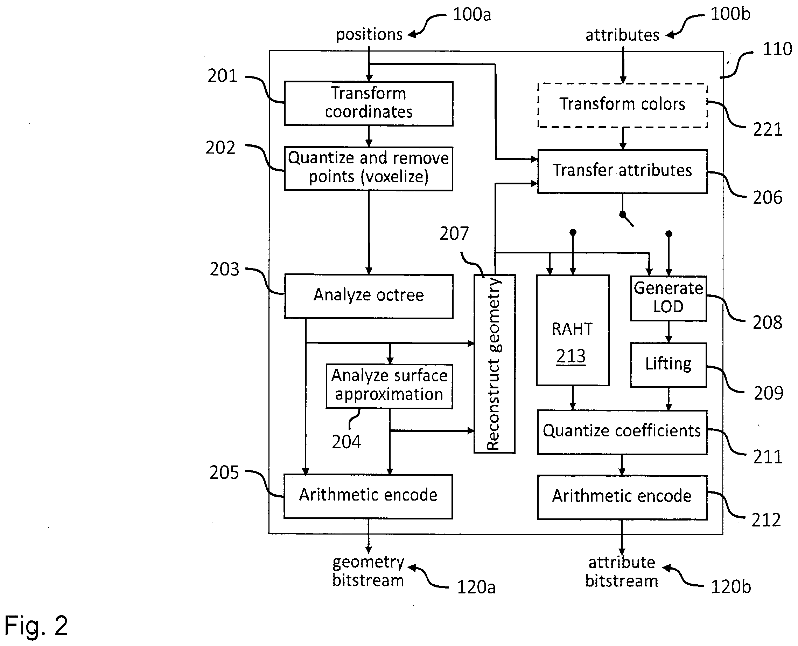

Figure 2 shows the encoder 110 according to an embodiment that produces the geometry bitstream 120a and the attribute bitstream 120b based on the positions 100a and attributes 110b of the input point cloud 100. In an embodiment, the encoder 110 may comprise one or more of the processing blocks shown in figure 2, which may be implemented in hardware and/or software, for instance, by means of the processing circuitry 111 of the encoder 110 shown in figure 1.

The processing block 201 is performed for the set of original point positions 100a to remove bias (minimum value of points' position within a cloud could be non-zero) and convert the floating-point representation of the positions 100a to an integer representation. More specifically, a parameter T ("translation") may be used to removes bias (so that the minimal value of each coordinate within the output point cloud is zero) and scaling parameters may be used to convert the floating-point representation of the positions 100a of the points into a fixed-point representation, as will be described in the following in more detail.

The original point positions 100a are generally represented by floating point numbers and need not have any structure, lying in an original (or world) coordinate system denoted as $X_n^{orig}$ , n = 1, ..., N. Internal (or frame) coordinates $X_n^{int}$ , n = 1, ..., N, may be obtained by the processing block 201 based on the original coordinates by the coordinate transformation

$$X_n = \left(X_n^{orig} - T\right)/s,$$

where T = $(t_x, t_y, t_z)$. The parameters T and s may be selected such that the point positions $X_n^{int}$, n = 1, ..., N, lie in a bounding cube $[0.2^d)^3$ for some non-negative integer parameter d. Point positions in the internal coordinate system that have been compressed (i.e. encoded) and decompressed (i.e. decoded) are denoted herein as $\hat{X}_n$, n = 1, ..., $N_{out}$, where N is the number of points of the original point cloud 100 and $N_{out}$ is the number of points in the decoded point cloud 100'. As will be appreciated, $N_{out}$ may not be the same as N. The decoded point positions in the original coordinate system may be obtained from the decoded point positions in the internal coordinate system by the following coordinate transformation:

$$\hat{X}_n^{orig} = s\hat{X}_n + T.$$

This can alternatively be expressed by the following homogeneous transformation from internal to original coordinates:

$$\begin{bmatrix} \hat{x}_n^{orig} \\ \hat{y}_n^{orig} \\ \hat{z}_n^{orig} \\ 1 \end{bmatrix} = \begin{bmatrix} s & 0 & 0 & t_x \\ 0 & s & 0 & t_y \\ 0 & 0 & s & t_z \\ 0 & 0 & 0 & 1 \end{bmatrix} \begin{bmatrix} \hat{x}_n \\ \hat{y}_n \\ \hat{z}_n \\ 1 \end{bmatrix}.$$

The next processing block 202 "Quantize and remove points (voxelize)" may perform the following processing steps. The point positions in the internal coordinate system are rounded. More specifically, if $X_n^{int}$ denotes a point position in the internal coordinate system, then its representation as a non-negative d-bit integer is

$$X_n = \text{Round}(X_n^{int}),$$

where Round($\cdot$) is the function that rounds the components of a vector to the nearest integer. After such a quantization, there may be multiple points with the same position (referred to as duplicate points). These duplicate points may be optionally removed. If enabled, points with the same quantized coordinates are removed. Multiple points with the same quantized position and different attributes may be merged in a single point. The process of position quantization, duplicate point removal, and assignment of attributes to the remaining points is called voxelization, which may be considered as the process of grouping points together into voxels. The set of voxels may be the unit cubes [i - 0.5, i + 0.5) × [j - 0.5, j + 0.5) × [k - 0.5, k + 0.5) for integer values of i, j, and k between 0 and $2^d$ - 1. Specifically, the locations of all the points within a voxel may be quantized to the voxel centre, and the attributes of all the points within the voxel may be combined (e.g., averaged) and assigned to the voxel. A voxel is said to be occupied if it contains any point of the point cloud 100.

If an Octree geometry codec is used, then the geometry encoding proceeds as follows. A processing block 203 ("Analyze octree"), first, may define a cubical axis-aligned bounding box B by the two extreme points (0,0,0) and ($2^d$, $2^d$, $2^d$). An octree structure may then be built by recursively subdividing bounding box B. At each stage, a cube may be subdivided into 8 sub-cubes. An 8-bit code, named an occupancy code, may then be generated by associating a 1-bit value with each sub-cube in order to indicate whether it contains points (i.e., full and has value 1) or not (i.e., empty and has value 0). Only full sub-cubes with a size greater than 1 (i.e., non-voxels) are further subdivided. Since points may be duplicated, multiple points may be mapped to the same sub-cube of size 1 (i.e., the same voxel). In order to handle such a situation, the number of points for each sub-cube of dimension 1 may also be arithmetically encoded by the processing block 205. In an embodiment, the arithmetic encoder provided by the processing block 205 may be used for encode all information in the geometry bitstream 120a.

In order to guarantee encoder/decoder synchronization, the point order defined by the decoding process may be used during the level of detail generation process. The processing block 204 ("Analyze surface approximation") may set the block sizes to 2 x 2 x 2 or larger, and the collection of voxels within the block may be represented by some model. The geometry may be represented within each block as a surface that intersects each edge of the block at most once. Since there are 12 edges of a block, there can be at most 12 such intersections within a block. Each such intersection is called a vertex. A vertex along an edge is detected if and only if there is at least one occupied voxel adjacent to the edge among all blocks that share the edge. The position of a detected vertex along an edge may be the average position along the edge of all such voxels adjacent to the edge among all blocks that share the edge.

The processing block 204 may be used to encode a part of octree that is built by processing block 203. The output of processing block 204 (surface parameters) may be encoded by the processing block 205 using entropy coding as follows.

Vertices, nominally being intersections of a surface with edges of a block, are shared across neighbouring blocks, not only guaranteeing continuity across blocks of the reconstructed surface, but also reducing the number of bits required to code the collection of vertices. The set of vertices may be coded in two steps. In a first processing stage implemented by the processing block 205, the set of all the unique edges (or segments) of occupied blocks is computed, and a bit vector (or segment indicator) determines which segments contain a vertex and which do not. In a second processing stage implemented by the processing block 205, for each segment that contains a vertex, the position of the vertex along the segment is uniformly scalar quantized to a small number of levels (typically, but not necessarily equal to the block width if the geometric spatial resolution is desired to approximate the voxel resolution). The segment indicators and the vertex positions are entropy coded by an arithmetic coder implemented by the processing block 205. Thus, the geometry bitstream 120a itself may be a compound bitstream comprising octree, segment indicator, and vertex position bitstreams.

The processing block 207 of the encoder 110 is configured to reconstruct point positions in the same order and to the same values as it would be performed by the decoder 130 when processing, i.e. decoding the geometry bitstream 120a. Each point may have a set of associated values, i.e. each of the values corresponds to a point parameter or attribute, such as color, transparency, etc.

The encoder 110 may comprise a processing block 206 "Transfer attributes" (also referred to as "recolouring"). Given the input point cloud positions/attributes and the reconstructed positions $(\tilde{X}_i)_{i=0...N_{rec}-1}$, the purpose of the processing block 206 is to determine the attribute values that minimize the attribute distortions. In an embodiment, the processing block 206 of the encoder 110 may implement the following processing steps:

- Let $(X_i)_{i=0...N-1}$ and $(\tilde{X}_i)_{i=0...N_{rec}-1}$ be the input and the reconstructed positions, respectively.
- Let $N$ and $N_{rec}$ be the number of points in the original point cloud 100 and the reconstructed point cloud 100', respectively.

If duplicated points are merged, then $N_{rec} < N$, otherwise $N_{rec} = N$.

- For each point $\tilde{X}_i$ in the reconstructed point cloud 100', let $X_i^*$ be its nearest neighbour in the original point cloud 100 and $a_i^*$ the attribute value associated with $X_i^*$.

- For each point $\tilde{X}_i$ in the reconstructed point cloud 100', let $\mathbb{Q}^+(i) = (X_i^+(h))_{h \in \{1,...,H(i)\}}$ be the set of points in the original point cloud 100 that share $\tilde{X}_i$ as their nearest neighbour in the reconstructed point cloud 100', wherein $H(i)$ is the number of elements in $\mathbb{Q}^+(i)$, and $X_i^+(h)$ is one of the elements of $\mathbb{Q}^+(i)$. Note that $\mathbb{Q}^+(i)$ could be empty or could have one or multiple elements.

- If $\mathbb{Q}^+(i)$ is empty, then the attribute value $a_i^*$ is associated with the point $\tilde{X}_i$.

- If $\mathbb{Q}^+(i)$ is not empty, then the attribute value $\tilde{a}_i$ associated with the point $\tilde{X}_i$ may be determined based on the following equation:

$$\tilde{a}_i = \frac{1}{H(i)} \sum_{h=1}^{H(i)} a_i^+(h),$$

where the attribute value $a_i^+$ is associated with the point $\tilde{X}_i$ of the set of points $\mathbb{Q}^+(i)$.

The encoder 110 may further comprise a processing block 213 ("RAHT"; Region Adaptive Haar Transform) configured to transform a list of attributes $A_n$, $n = 1, ..., N$, which is an output of processing block 206 into a list of transform coefficients $T_n$, $n = 1, ... , N$, given a list of associated voxel locations $(x_n, y_n, z_n)$, $n = 1, ..., N$, as side information, and to invert the transform. In an embodiment, the processing block 213 may be configured to perform RAHT and its inverse with respect to a hierarchy defined by the Morton codes of the voxel locations. The Morton code of d-bit non-negative integer coordinates $x$, $y$, and $z$ is a 3d-bit non-negative integer obtained by interleaving the bits of $x$, $y$, and $z$. More specifically, the Morton code M = $morton(x, y, z)$ of non-negative d-bit integers coordinates, i.e.

$$x = \sum_{\ell=1}^{d} 2^{d-\ell} x_\ell, \qquad y = \sum_{\ell=1}^{d} 2^{d-\ell} y_\ell, \qquad z = \sum_{\ell=1}^{d} 2^{d-\ell} z_\ell,$$

where $x_\ell$, $y_\ell$, $z_\ell \in \{0,1\}$ are the bits of $x$, $y$, and $z$ from $\ell = 1$ (high order) to $\ell = d$ (low order), may be the non-negative 3d-bit integer

$$M = \sum_{\ell=1}^{d} 2^{3(d-\ell)} (4x_\ell + 2y_\ell + z_\ell) = \sum_{\ell'=1}^{3d} 2^{3d-\ell'} m_{\ell'},$$

where $m_{\ell'} \in \{0,1\}$ are the bits of M from $\ell' = 1$ (high order) to $\ell' = 3d$ (low order).

Let $prefix_{\ell'}(M) = \lfloor 2^{-\left(3d-\ell'\right)} M \rfloor$ denote the $\ell'$-bit prefix of M. Let m be such a prefix. Define the block at level $\ell'$ with prefix m to be the set of all points $(x, y, z)$ for which m = $prefix_{\ell'}(morton(x, y, z))$. Two blocks at level $\ell'$ are considered to be sibling blocks if they have the same $(\ell' - 1)$-bit prefix. The union of two sibling blocks at level $\ell'$ is a block at level $(\ell' - 1)$ called their parent block. The RAHT (Region Adaptive Haar Transform) of the sequence $A_n$, $n = 1, ..., N$, and its inverse as implemented by the processing block 213 may be defined recursively as follows.

Let $A_n$ be the attribute of a point and let $T_n$ be its transform. Then $T_n = A_n$. Consider two sibling blocks and their parent block. Let $(A_{01}, A_{02}, ..., A_{0w_0})$ and $(A_{11}, A_{12}, ..., A_{1w_1})$ be the attributes of the points $(x_n, y_n, z_n)$ in the sibling blocks, listed in increasing Morton order, and let $(T_{01}, T_{02}, ... , T_{0w_0})$ and $(T_{11}, T_{12}, ... , T_{1w_1})$ be their respective transforms. Similarly, let $(A_1, A_2, ..., A_{w_0+w_1})$ be the attributes of all points $(x_n, y_n, z_n)$ in their parent block, listed in increasing Morton order, and let $(T_1, T_2, ..., T_{w_0+w_1})$ be its transform. Then,

$$\left(T_1, T_2, ..., T_{w_0}, T_{w_0+1}, T_{w_0+2}, ..., T_{w_0+w_1}\right) = \left(aT_{01} + bT_{11}, T_{02}, ..., T_{0w_0}, -bT_{01} + aT_{11}, T_{12}, ..., T_{1w_1}\right),$$

$$\left(T_{01}, T_{02}, ..., T_{0w_0}\right) = \left(aT_1 - bT_{w_0+1}, T_2, ..., T_{w_0}\right),$$

$$\left(T_{11}, T_{12}, ..., T_{1w_1}\right) = \left(bT_1 + aT_{w_0+1}, T_{w_0+2}, ..., T_{w_0+w_1}\right),$$

where $a = \sqrt{\frac{w_0}{w_0+w_1}}$ and $b = \sqrt{\frac{w_1}{w_0+w_1}}$. In other words, in an embodiment, the transform of the parent block is the concatenation of the two sibling blocks, with the exception that the first (DC) components of the transforms of the two sibling blocks are replaced by their weighted sum and difference, and inversely the transforms of the two sibling blocks are copied from the first and last parts of the transform of the parent block, with the exception that the DC components of the transforms of the two sibling blocks are replaced by their weighted difference and sum, namely

$$\begin{bmatrix} T_1 \\ T_{w_0+1} \end{bmatrix} = \begin{bmatrix} a & b \\ -b & a \end{bmatrix} \begin{bmatrix} T_{01} \\ T_{11} \end{bmatrix}$$

and

$$\begin{bmatrix} T_{01} \\ T_{11} \end{bmatrix} = \begin{bmatrix} a & -b \\ b & a \end{bmatrix} \begin{bmatrix} T_1 \\ T_{w_0+1} \end{bmatrix}.$$

These are known as Givens rotations.

As illustrated in figure 2, in addition or as an alternative to the RAHT processing block 213 the encoder 110 may further comprise a processing block 208 ("Generate LOD") configured to encode attributes 100b using the Level-of-Details approach and a processing block 209 implementing a lifting operation 209. In an embodiment, the selection whether the processing block 213 or the processing blocks 209, 209 are used, may be performed by the encoder 110 and signalled in the attribute bitstream 120b.

In an embodiment, the (LOD) generation processing block 208 is configured to re-organize the points into a set of refinement levels $(R_l)_{l=0...L-1}$, according to a set of Euclidean distances $(d_l)_{l=0...L-1}$ specified, for instance, by a user. The distances $(d_l)_{0=0...L-1}$ should satisfy the following two conditions:

- $d_l < d_{l-1},$

and

- $d_{L-1} = 0.$

The re-ordering process is deterministic and operates on the quantized positions ordered according to the octree decoding process. It may be applied at both the encoder **110** and the decoder 130 side. More specifically, the re-ordering process implemented by the processing block 208 may comprise the following stages:

- First, all the points are marked as non-visited and the set of visited points, denoted as V, is set as empty.
- Iteratively, at each iteration $I$, the refinement level $R_l$ is generated as follows:

  ○ Iteration is performed over all the points.
  ○ If the current point has been visited, then it is ignored.
  ○ Otherwise, the minimum distance D of the current point to the set V is computed.
  ○ If D is strictly lower than $d_l$, then the current point is ignored.
  ○ If D is higher or equal than $d_l$, then the current point is marked as visited and added to both $R_l$ and *V*.
  ○ This is repeated until all the points have been traversed.

- The level of detail I, $LOD_l$, is obtained by taking the union of the refinement levels $R_0$, $R_1$, ..., $R_l$.
- This is repeated until all the LODs are generated or until all the vertices have been visited.

As will be appreciated, the LOD-based prediction strategy implemented by the processing block 208 makes points in lower LODs more influential since they are used more often for prediction. More specifically, let *w(P)* be the influence weight associated with a point P. Then *w(P)* may be computed by applying the following recursive procedure:

- Set *w(P)* = 1 for all points
- Traverse the points according to the inverse of the order defined by the LOD structure
- For every point $Q(i, j)$, update the weights of its neighbors $P \in V(Q(i, j))$ as follows:

$$w(P) \leftarrow w(P) + w(Q(i,j),j) \ \alpha(P, Q(i,j)).$$

In an embodiment, the processing block 209 may implement an update operator that uses the prediction residuals $D(Q(i,j))$ to update the attribute values of LOD(j). More specifically, let $\Delta(P)$ be the set of points $Q(i,j)$ such that $P \in V(Q(i, j))$. Then, the update operation for P implemented by the processing block 209 may be defined as follows:

$$Update(P) = \frac{\sum_{Q \in \Delta(P)}[\alpha(P,Q) \times w(Q) \times D(Q)]}{\sum_{Q \in \Delta(P)}[\alpha(P,Q) \times w(Q)]}$$

The encoder 110 may further comprise a processing block 211 ("Quantize coefficients") for quantizing the influence weights computed during the transform process. Those may be leveraged in order to guide the quantization process. More specifically, the coefficients associated with a point P are multiplied by a factor of $\sqrt{w(P)}$. An inverse

scaling process by the same factor is applied after inverse quantization on the decoder 130 side. The scaling factors are completely determined by the reconstructed geometry and, thus, do not need to be encoded in the bitstream 120b.

The encoder 110 may further comprise a processing block 212 ("Arithmetic encode") for encoding the quantized coefficients provided by processing block 211 and thereby generating the attribute bitstream 120b.

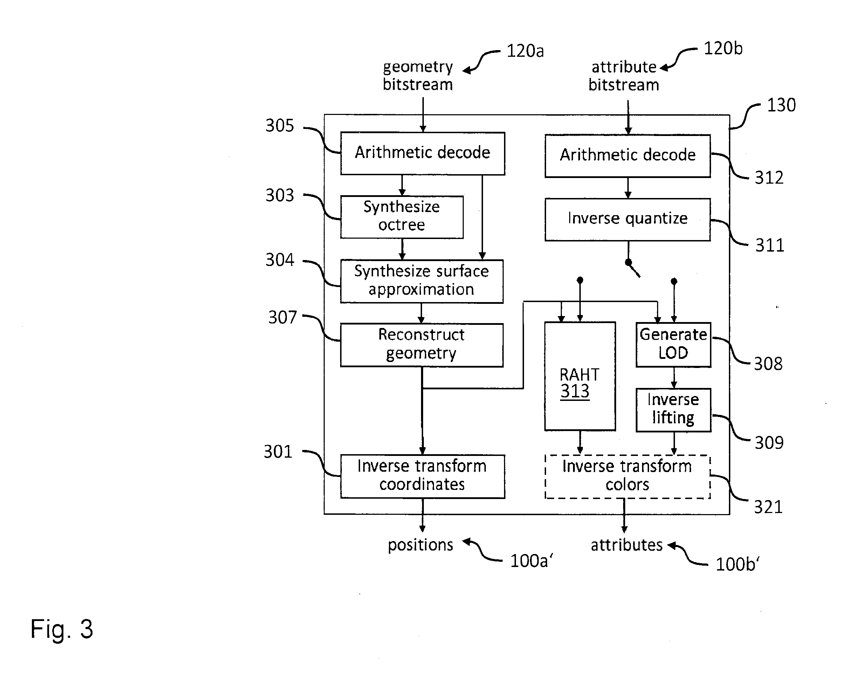

Figure 3 shows the decoder 130 according to an embodiment that is configured to generate decoded positions 100a' and attributes 100b', i.e. the reconstructed point cloud 100' based on the geometry bitstream 120a and attributes bitstream 120b (provided, for instance, by the encoder 110 of figure 2 based on the input point cloud 100). In an embodiment, the decoder 130 may comprise one or more of the processing blocks shown in figure 3, which may be implemented in hardware and/or software, for instance, by means of the processing circuitry 131 of the decoder shown in figure 1. As will be appreciated, many of the processing blocks of the decoder 130 may be identical or the inverse of the corresponding processing blocks of the encoder 110 shown in figure 2. Therefore, in the following mainly the differences between the decoder 130 shown in figure 3 and the encoder 110 shown in figure 2 will be described in more detail.

Processing blocks 305 and 312 of the decoder 130 receive the geometry bitstream 120a and the attribute bitstream 120b and perform arithmetic decoding. The results of the arithmetic decoding for the geometry bitstream 120a are further used by the processing block 303 to synthesize an octree. A processing block 304 ("Synthesize surface approximation") is configured to perform surface approximations in some of the parts of the synthesized tree. The processing blocks 302 and 304 operate as the processing blocks 203 and 204 of the encoder 110 described above. The difference between decoder-side and encoder-side steps is that for the decoder-side process decisions are taken in accordance with the contents of the bitstream 120a, 120b. Moreover, the processing block 307 ("Reconstruct geometry") is identical to the processing block 207 described above. The processing block 301 ("Inverse transform of coordinates") of the decoder 130 is configured to perform operations inverse to the operations performed by the processing block 201 of the encoder 110 so that the decoded positions 100a' match the positions 100a provided as one of the inputs to the decoder 110.

For decoding the attribute bitstream 120b the decoder 130 comprises an arithmetic decoding processing block 312 and an inverse quantization processing block 311, which is configured to restore decoded coefficients from their quantized representation that is signaled in the attribute bitstream 120b. The attribute transforms are applied in the same way as it is done by the encoder 120, i.e. the processing blocks 308, 309 and 313 of the decoder 130 are identical to the corresponding processing blocks 208, 209 and 213 of the encoder 110 shown in figure 2 and described above. The only difference is that the selection between the processing block 213 and the processing blocks 208, 209 is signaled in the attribute bitstream 120b.

Finally, the processing block 321 of the decoder 130 provides the mapping, which is inverse to the mapping provided by the processing block 221 of the encoder 110. Doing so, the decoded attributes 100b' are recovered from the attribute bitstream 120b.

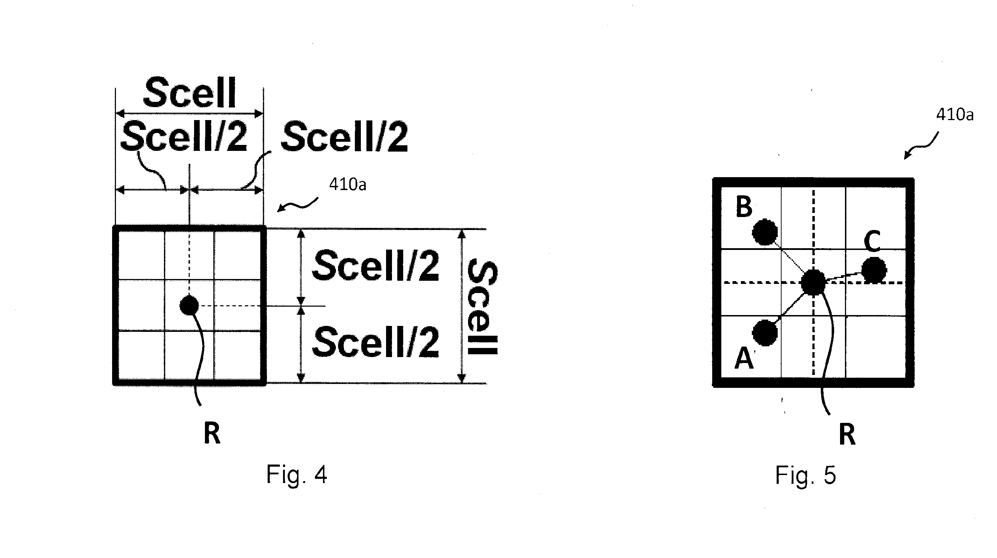

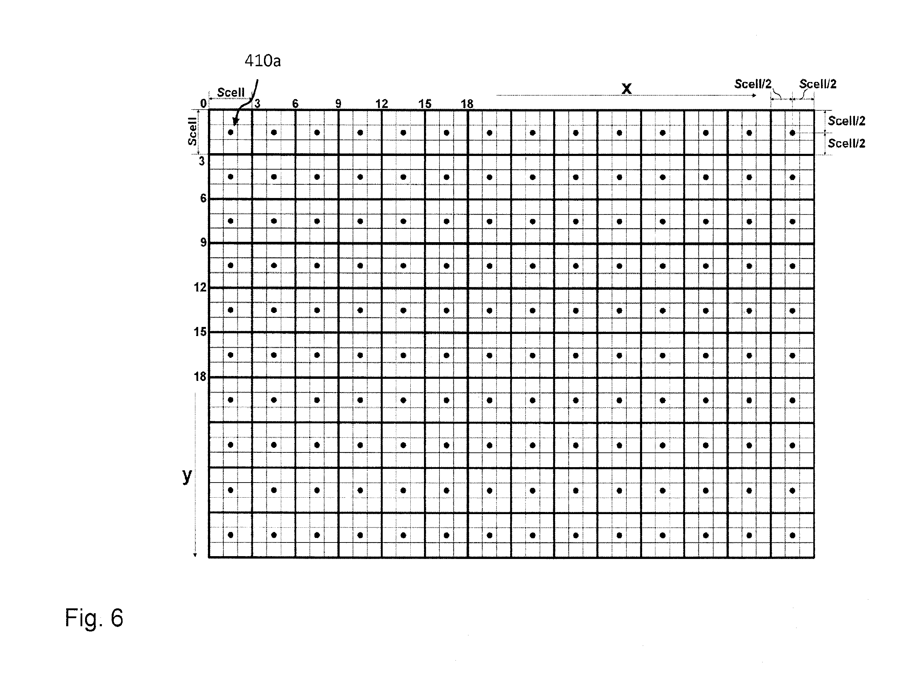

Figures 4 and 5 show a conventional 2D quantization cell 410a of size $S_{cell}$ with 9 integer positions. Conventionally, the smaller squares within the quantization cell 410a are areas that are floored to corresponding integer positions (by removing fractional parts of coordinates of their positions). Hence, a center R of the conventional quantization cell 410a is offset relative to integer position on $\frac{S_{cell}}{2}$ samples. In particular, for the examples shown in figures 4 and 5, this offset is $\frac{S_{cell}}{2} = \frac{3}{2} = 1.5$ samples for x and y coordinates. In figure 5, the exemplary point positions "A", "B" and "C" are belonging to the same quantization cell 410a, and thus, any of these points would be reconstructed by a conventional decoder as position "R". In conventional encoding methods (such as CDVS), for a given quantization cell size, the input points encompassed by a quantization cell would be reconstructed as coinciding points with coordinates of the center of the quantization cell, as illustrated in figure 4. Figure 6 illustrates the conventionally allowed reconstruction positions for the case, when the size of the quantization cell is equal to three samples (i.e. a cell is a 3x3 samples square).

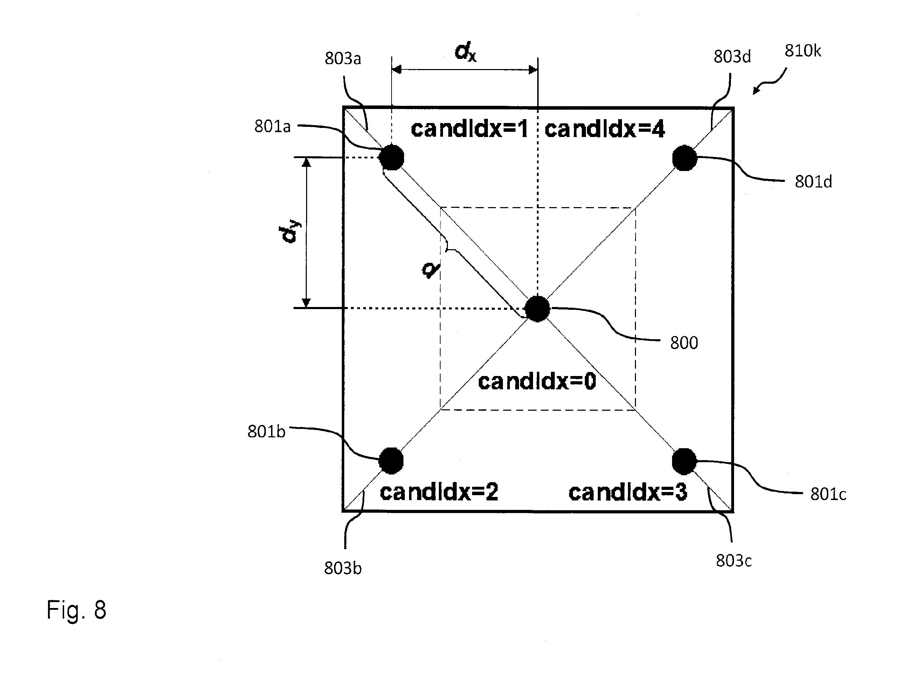

As will be described in more detail in the following under further reference in particular to figure 7, for compressing the point cloud 100, which is defined in a multi-dimensional space, e.g. a 2D or 3D space, the processing circuitry 111 of the encoding apparatus 110 is configured to generate based on the point cloud 100 a quantized point cloud. Each point 101 of the point cloud 100 is located within one of a plurality of quantization cells 810a-p partitioning the multi-dimensional space (in the embodiment shown in figure 8 a 2D space), wherein at least one quantization cell 810k (and possibly all) of the plurality of quantization cells 810a-p defines a primary quantization position 800 and at least one secondary quantization position 801a-d. In the 2D embodiment shown in figure 7, the exemplary square shaped quantization cell 810k comprise in addition to the primary quantization position 800 four secondary quantization positions 801a-d located in the respective quadrants of the square shaped quantization cell 810k. As already mentioned, in an embodiment, all of the plurality of quantization cells 810a-p may define a primary quantization position 800 and one or more, in particular four secondary quantization positions 801a-d like the exemplary quantization cell 810k shown in more detail in figure 7.

The processing circuitry 111 of the encoding apparatus 110 is configured to generate the quantized point cloud by shifting each point 101 of the point cloud 100 located within a respective quantization cell 810a-p depending on its position within the respective quantization cell 810a-p either to the respective primary quantization position 800 or to one of the one or more, in particular four secondary quantization positions 801a-d. Furthermore, the processing circuitry 111 of the encoding apparatus 110 is configured to encode the quantized point cloud for generating the bitstream 120, in particular the geometry bitstream 120a portion thereof. In an embodiment, the processing circuitry 111 of the encoder 110 is configured to encode the quantized point cloud by encoding an identifier of the quantization position, i.e. either the primary quantization position 800 or one of the four secondary quantization positions 801a-d, each point 101 of the point cloud 100 located within the quantization cell 810k is shifted to. As illustrated in figure 7, in an embodiment, the identifier "candldx" could define the values "0", "1", "2", "3" or "4" for identifying either the primary quantization position 800 or one of the four secondary quantization positions 801a-d.

As already described above, the decoding apparatus 130 is configured to decompress the bitstream 120, including the geometry bitstream 120a into the reconstructed point cloud 100'. To this end, the processing circuitry 131 of the decoding apparatus 130 is configured to decode for each point 101' of the reconstructed point cloud 100' located within a respective quantization cell of the plurality of quantization cells 810a-p, such as the exemplary quantization cell 810k an identifier indicative of the primary quantization position 800 or one of the one or more, in particular four secondary quantization positions 801a-d. Based on the information about the quantization position, i.e. the primary quantization position 800 or one of the one or more secondary quantization positions 801a-d, decoded by means of the identifier the processing circuitry 131 of the decoder 130 is further configured to position the respective point 101' of the point cloud 100' at the primary quantization position 800 or the one of the one or more secondary quantization positions 801a-d.

As illustrated in figure 8, in an embodiment, the one or more secondary quantization positions 801a-d may be located on the diagonals 803a-d of the respective quantization cell 810k. In an embodiment, the respective distance d between the primary quantization position 800 and the secondary quantization positions 801a-d may be equal. Mathematically it can be shown that in terms of the $L_2$-norm, the optimal locations of the secondary quantization positions 801a-d with respect to the to the center of the quantization cell 810k, i.e. primary quantization position 800 are defined by the following distances:

$$d_x = d_y = S \cdot \frac{(\sqrt{5}+1)}{5\sqrt{5}},$$

wherein S denotes the length of the quantization cell 810k. The value of S is also referred to as the size of a cell. Thus, in an embodiment, the projected distance $d_x$, $d_y$ of the distance d of the one or more secondary quantization positions 801a-d from the primary quantization position 800 may be in the range $0.9 \cdot d_0 \le d_x \le 1.1 \cdot d_0$ and $0.9 \cdot d_0 \le d_y \le 1.1 \cdot d_0$ with

$$d_0 = S \cdot \frac{(\sqrt{5}+1)}{5\sqrt{5}}.$$

The above relationship between $d_0$ and S provides a suboptimal minimum of the sum of squared errors ($\Sigma \varepsilon^2$) within the quantization cell 810k with the central primary quantization position 800 and the four secondary quantization positions 801a-d.

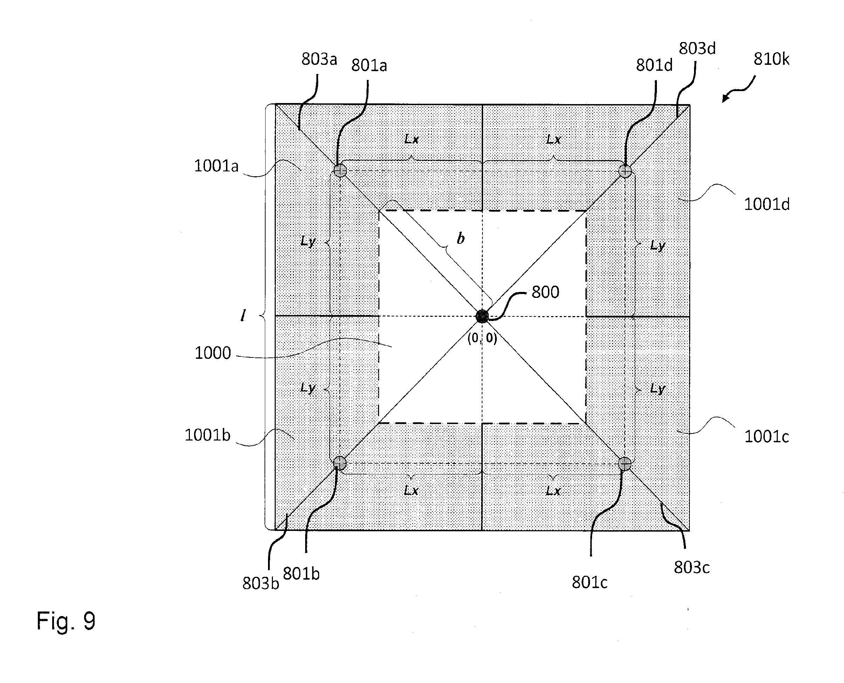

This suboptimality is achieved by covering the square area of the quantization cell 810k by the 5 portions 1000, 1000a-d illustrated in figure 9, including the central square shaped portion 1000 and the four L-shaped portions 1000a-d having the same area. The following equations define the respective sizes of these portions 1000, 1000a-d:

$$2b = \sqrt{\frac{l^2}{5} + \frac{l^2}{5}} = \sqrt{\frac{2l^2}{5}} = \sqrt{\frac{2}{5}} l$$

$$b = \sqrt{\frac{2}{5}\frac{l}{2}} = \sqrt{\frac{2}{5 \cdot 4}} l = \frac{l}{\sqrt{10}}$$

As will be appreciated, for other optimization criteria, such as metrics based on the $L_1$ or $L_\infty$ norm the optimal value of $d_0$ could be different from the one specified above.

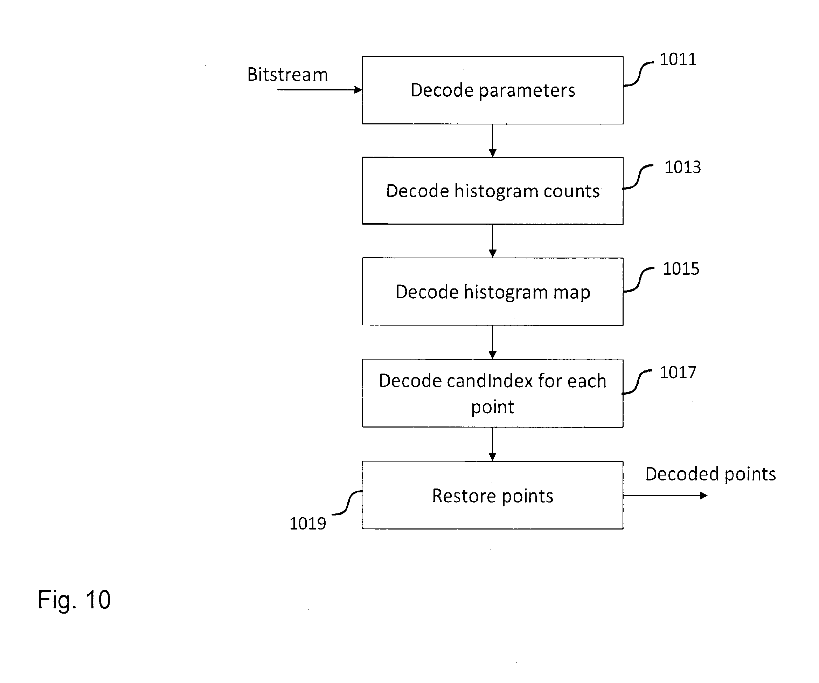

Figure 10 is a flow diagram illustrating processing steps implemented by the decoding apparatus 130 according to an embodiment implemented for CDVS. In comparison to a conventional CDVS decoder, which is configured to perform the steps 1011, 1013, 1015 and 1019, the CDVS decoding apparatus 130 according to an embodiment comprises the further step 1017 "Decode candldx for each point". In this step 1017, a codeword for each occupied cell is decoded from the bitstream 120, and for each occupied cell, the candldx value is determined based on these codewords. For an occupied cell in the "Restore points" step 1019, position of the output points are determined in accordance with the candldx value specified for the respective quantization cell 810k.

In step 1011 of figure 10, the decoder 130 obtains decode parameters by parsing the input bitstream 120. These parameters may comprise the following: cell size in samples, width and height of a picture, and the like.

In step 1013 of figure 10, the number of points per cell is decoded. This process comprises: decoding the number of non-empty cells; and decoding the number of points per each non-empty cell.

In step 1015 each cell is determined to be empty or non-empty. This determination is performed on the basis of a decoded map ("histogram map").

In step 1019, a space-filling curve is defined based on the histogram map. This curve specifies an order in which non-empty cells are visited. If a cell is non-empty, positions of points are parsed from the bitstream 120. Conventionally, the points belonging to the cell are decoded to the same position within a cell (e.g. its geometrical center). However, as already described above, points are restored in accordance with the values of candIdx that are obtained in step 1017.

According to an example that is not encompassed by the claims but useful for understanding the invention, the value of the identifier "candIdx" may be set to 0 (i.e. indicative of the central primary reference position 800), when the number of points of the quantization cell 810k is greater than 1. In this example, the identifier, e.g. the value of "candIdx" may be signaled within the bitstream 120 only for those quantization cells 810a-p that only have one point.

According to another example that is not encompassed by the claims but useful for understanding the invention, for quantization cells 810a-p having more than 1 point, the positions of the restored points may be distributed between the central primary reference position 800 and the four secondary quantization positions 801a-d. For example, for a set A of N reconstructed points within a quantization cell 810a-p, the identifier, e.g. the value of "candIdx" may be defined in the following way:

$$a_i \in A; i \in [0, N-1]; \mathrm{candIdx}(a_i) = i \bmod 5$$

In this example, the decoding apparatus 130 distributes positions of the reconstructed points within the set of permitted positions. This mechanism may be selected under the assumption that the spatial distribution of the input points within a quantization cell 810a-p is uniform.

The signaling of the identifier, e.g. the value of "candIdx" for the 2D case may be done using codeword construction illustrated in the following table.

| Codeword | | candIdx |
|---|---|---|
| MPM flag value | 2-bit FLC value | |
| 0 | N/A | 0 |
| 1 | 00 | 1 |
| 1 | 01 | 2 |
| 1 | 10 | 3 |
| 1 | 11 | 4 |

As can be taken from the table, firstly, the value of the MPM flag may be signaled in the bitstream 120. When the value of the MPM flag is 0, no further coding is performed and the restored points are positioned at the central primary reference position 800 of the respective quantization cell 810a-p. When the value of the MPM flag is 1, a fixed-length code may be signaled indicating the "candIdx" value. In the exemplary embodiment shown in the table, this fixed-length code may have a length of 2 bits.

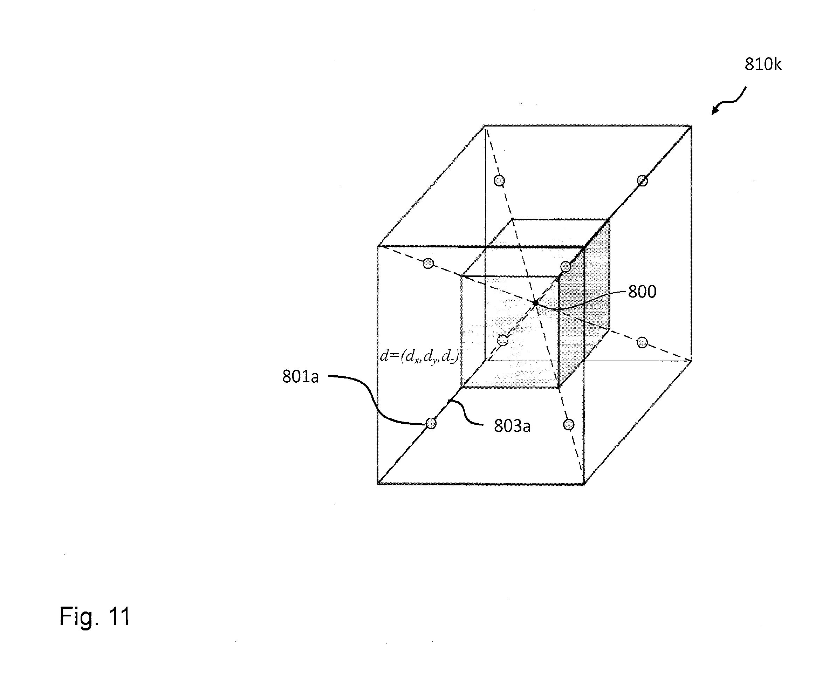

Figure 11 illustrates an exemplary cube-shaped quantization cell 810k used by the encoding apparatus 110 and the decoding apparatus 130 according to an embodiment for processing a 3D point cloud 100. As illustrated in figure 11, the exemplary cube-shaped quantization cell 810k may define eight secondary quantization positions, such as the exemplary secondary quantization position 801a, that are located on the a diagonal, such as the diagonal 803a, of the cube-shaped quantization cell 810k in a respective octant thereof.

The following table exemplary codewords are listed that may be employed by the encoding apparatus 110 according to an embodiment for identifying the central primary reference position 800 or one of the eight secondary quantization positions, such as the exemplary secondary quantization position 801a, of the cube-shaped quantization cell 810k shown in figure 11. As will be appreciated, these codewords are similar to the codewords for the 2D case described above with the difference that for the 3D case a fixed-length code (FLC) with 3 bits is used for distinguishing between all of the 8 secondary quantization positions of the cube-shaped quantization cell 810k of figure 10.

| Codeword | | candIdx |
|---|---|---|
| MPM flag value | 3-bit FLC value | |
| 0 | N/A | 0 |
| 1 | 000 | 1 |
| 1 | 001 | 2 |
| 1 | 010 | 3 |
| 1 | 011 | 4 |
| 1 | 100 | 5 |
| 1 | 101 | 6 |
| 1 | 110 | 7 |
| 1 | 111 | 8 |

An exemplary bitstream syntax that utilizes the codeword construction mechanism illustrated in the tables above for the 2D and the 3D case is shown in the following table:

| ... | |
|---|---|
| **displacement_flag** | u(1) |
| if (displacement_flag) { | |
| **displacement_code** | u(2) |
| } | |
| ... | |

In an embodiment, the syntax element **"displacement_flag"** may indicates whether the reconstructed position should be the central primary reference position 800 of the decoded quantization cell 810a-p, or whether it should be displaced. When this flag is not present it is inferred to 0. This flag is also referred to as "MPM flag value" in Table 1. The syntax element **"displacement_code"** (also referred to as "2-bit FLC value" or "3-bit FLC value" in the tables above) indicates the selected secondary quantization position to which the reconstructed point(s) of the quantization cell 810a-p should be assigned, i.e. shifted to. This value may be used only when the value of "displacement_flag" is non-zero.

As will be appreciated, the exemplary cube-shaped quantization cell 810k shown in figure 11 is a three-dimensional partition of 3D space that corresponds to a node of a spatial tree (e.g., oct-tree of G-PCC or kd-tree of Google Draco).

As already described above, in an embodiment, the secondary quantization positions within a quantization cell 810a-p may be defined by a vector d that connects the central primary reference position 800 of the respective quantization cell 810a-p with a point on a diagonal thereof. For an n-dimensional case the number $N_{ap}$ of secondary quantization positions may be chosen as $N_{ap} = 2^n$, since each secondary quantization position may be associated with a corresponding vertex of an n-dimensional quantization cell.

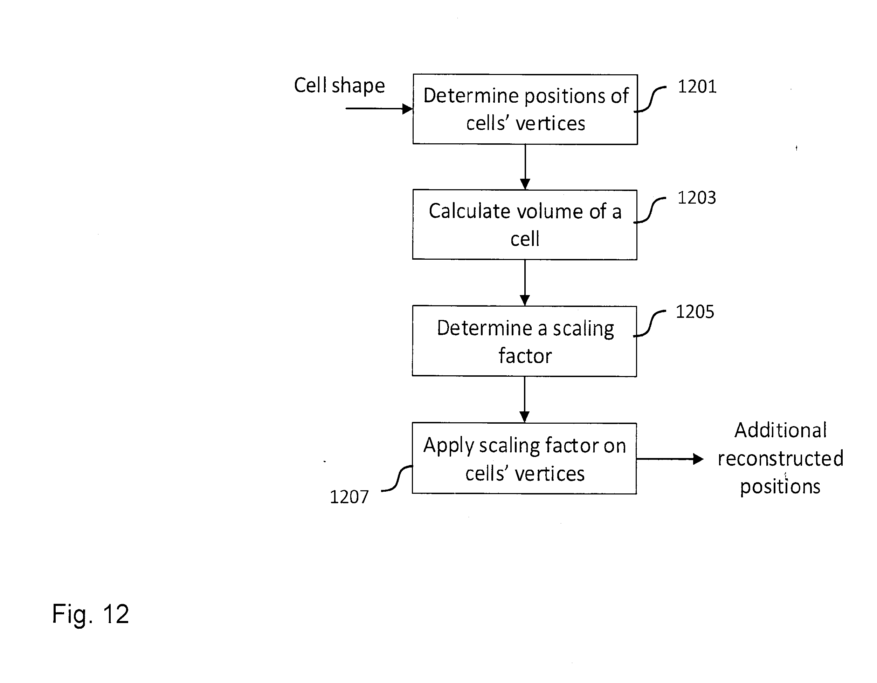

In an embodiment, the encoding apparatus 110 and the decoding apparatus 130 according to an embodiment may be configured to perform the steps illustrated in figure 12 for determining the secondary quantization positions (referred to as additional reconstructed positions in figure 12) for an arbitrary convex shape of a quantization cell of arbitrary dimensionality n. The shape of the quantization cell may be defined by the set of vertices $\{v_i\}$, $i \in [0, 2^n - 1]$ with respect to its center of symmetry C. At least, for a 2-dimensional rectangular cell shape and for a 3-dimensional parallelogram cell shape the center of symmetry is the intersection of diagonals of the rectangle and the parallelogram, respectively. More precisely, the coordinates of the vertices $\{v_i\}$ defined with respect to the center of symmetry should satisfy:

$$\sum_{i=0}^{N-1} v_{i,k} = 0,$$

where $k \in [0, n - 1]$ denotes the index of dimension and $N$ denotes the number of vertices of the quantization cell. Thus, after the step 1201 of determining the positions of the vertices of the quantization cell, the volume of the quantization cell may be calculated (step 1203 of figure 12). For an n-dimensional cube, its volume is calculated as $l^n$, where $l$ is the cube side length. For the set of verices $\{v_i\}$ and the cube shape the following should be satisfied:

$$\left| v_{i,k} \right| = \mathrm{const},$$

and hence, the cell volume V may be calculated in step 1203 as follows:

$$V = \left( 2 \cdot \left| v_{0,0} \right| \right)^n.$$

It can be assumed that a quantization cell can be split into $N_0 = 1 + N_{\mathrm{ap}} = 1 + 2^n$ subcells having equal (or almost equal) volumes. Therefore, the scaling factor may be determined in step 1205 of figure 12 as follows:

$$f = \frac{1}{N_0}.$$

In step 1207 of figure 12, the determined scaling factor is obtained to get the offsets $s_i = v_i - d_i$ of the secondary reference positions relative to the respective position of vertices. For an N-dimensional cube:

$$f \cdot V = \left( 2 \cdot \left| s_{0,0} \right| \right)^n = f \cdot \left( 2 \cdot \left| v_{0,0} \right| \right)^n$$

$$2 \cdot \left| s_{i,0} \right| = \sqrt[n]{\frac{\left( 2 \cdot \left| v_{i,0} \right| \right)^n}{N_0}}$$

$$s_{i,0} = \sqrt[n]{\frac{\left( 2^{1-n} \cdot \left| v_{i,0} \right| \right)^n}{N_0}}$$

Therefore, the secondary reference positions (for an n-dimensional cube) could be defined based on the following distances:

$$d_0 = v_0 - \sqrt[n]{\frac{(2^{1-n} \cdot |v_0|)^n}{N_0}}.$$

In the equations above for deriving the secondary reference positions for an n-dimensional cube, the nominator has an expression of the form $\sqrt[n]{|x|^n}$. This expression may be generalized from the cubic to a parallelogram case, by using the Minkovski metric of the form $\sqrt[n]{\sum |x|^n}$, which provides an individual displacement per secondary reference positions with index i as follows:

$$\left| d_i \right| = \left| v_i \right| - \sqrt[n]{\frac{\left( \sum_{k=0}^{n-1} \left| v_{i,k} \right|^n \right)}{n \cdot N_0}}, \quad \left| v_i \right| = \sqrt[n]{\frac{\left( \sum_{k=0}^{n-1} \left| v_{i,k} \right|^n \right)}{n}}$$

In a further embodiment, the parameter defining the Minkovski distance may be defined differently from the number of dimensions of the compressed point cloud. For, example, a pre-determined parameter p could be defined, and the distance value may be defined as follows:

$$\left| d_i \right| = \left| v_i \right| - \sqrt[p]{\frac{\left( \sum_{k=0}^{n-1} \left| v_{i,k} \right|^p \right)}{n \cdot N_0}}.$$

As will be appreciated, steps 1203 and 1205 of figure 12 may be skipped, and step 1205 may be performed on the basis of positions of cell shape vertices, the number of secondary reference positions, and the selected distance metrics.

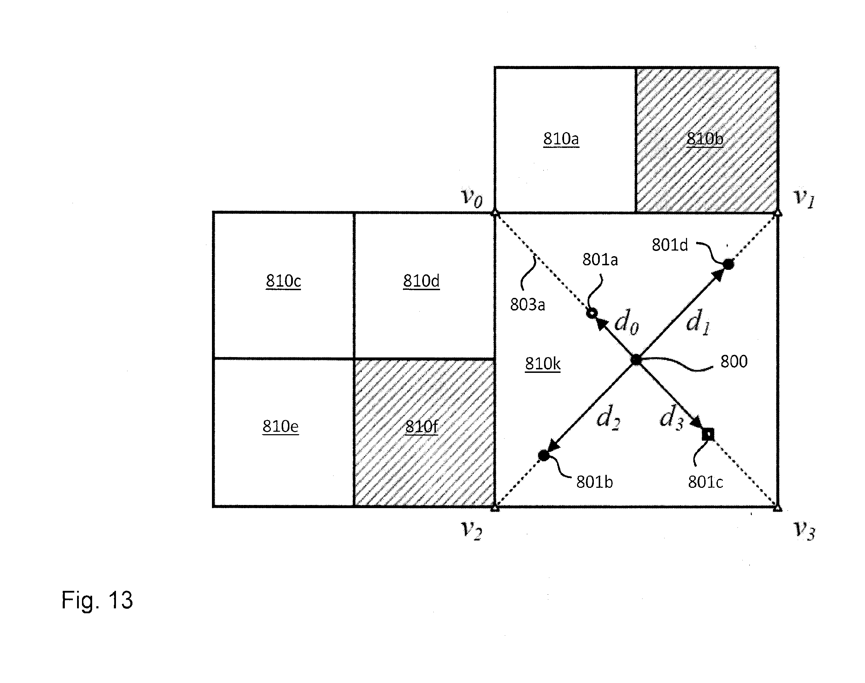

In a further embodiment illustrated in figure 13 for the exemplary 2D case, the secondary reference positions 801a-d may be distributed asymmetrically with respect to the central primary reference position 800 of the quantization cell 810k being processed. In other words, in an embodiment, the secondary reference positions 801a-d may have different distances from the central primary reference position 800 of the quantization cell 810k being processed. To this end, in an embodiment, the secondary reference positions 801a-d may be defined by a set of scalar values, wherein each of these values defines the magnitude, i.e. length of a vector $d_i$ that connects the central primary reference position 800 with the respective secondary reference positions 801a-d. This set of scalar values, one value per secondary reference position 801a-d may be determined in the following way.

For a respective secondary reference position 801a-d a cell vertex $v_i$ is determined, so that $v_i$ may be displaced from its position on a respective diagonal. Cell vertex $v_i$ is further classified to either:

- class A: belonging to a neighboring quantization cell 810g, 810f that comprise at least one reconstructed point of the coded point cloud (vertices $v_1$ and $v_2$);
- class B: belonging to a neighboring quantization cell 810a, 810d that does not comprise reconstructed points of the coded point cloud (vertex $v_0$);
- class C: not belonging to a cell that has been reconstructed (vertex $v_3$);

Depending on the class of vertex $v_i$ the scalar value $|d_i| = f(v_i)$ may be determined. In an exemplary embodiment, factors $a_i$ could be defined to take this dependency into account:

$$|d_i| = |v_i| - a_i \cdot \sqrt[p]{\frac{\left( \sum_{k=0}^{n-1} |v_{i,k}|^p \right)}{n \cdot N_0}}$$

An exemplary assignment of factors $\{a_i\}$ is given in the following table.

| Class of $v_i$ | $a_i$ |
|---|---|
| A | 0.75 |
| B | 1.25 |
| C | 1 |

As will be appreciate, the floating point values provided in the table above do not have to be implemented using floating point arithmetic.

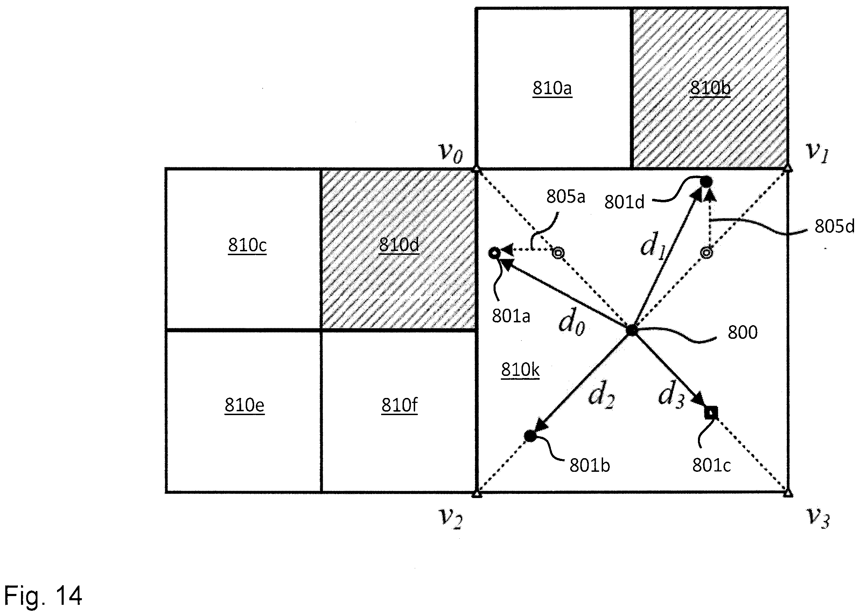

In a further embodiment illustrated in figure 14, one or more of the secondary reference positions 801a-d may be displaced with respect to the diagonals of the respective quantization cell 810k. For this purpose, a displacement vector $\delta = \{\delta_x, \delta_y, \delta_z, ... \}$ 805a, 805d may be determined for one or more of the secondary reference positions 801a-d, wherein applying the respective displacement vector 805a, 805d leads to a displacement of the respective secondary reference position 801a-d from the cell diagonal. In the embodiment shown in figure 14, by way of example, the secondary reference position 801a is displaced by the displacement vector 805a from the diagonal and the secondary reference position 801d is displaced by the displacement vector 805f from the diagonal of the quantization cell 810k.

In an embodiment, the respective displacement vector $\delta$ may be defined by in addition to the previous embodiments distinguish between the orientation of the neighboring quantization cells of the currently processed quantization cell 810k relative to the respective vertex $v_i$. For a 3-dimensional case, the displacement vector may be defined as follows:

$$\delta_x = a_{i,x} \cdot \sqrt[p]{\frac{v_{i,x}^p}{N_0}}$$

$$\delta_y = a_{i,y} \cdot \sqrt[p]{\frac{v_{i,y}^p}{N_0}}$$

$$\delta_z = a_{i,z} \cdot \sqrt[p]{\frac{v_{i,z}^p}{N_0}}$$

The values of $\{a_{i,x}, a_{i,y}, a_{i,z}\}$ may be determined using the table above, where the class is defined separately for axes x, y, z, respectively. Specifically, for determining $a_{i,x}$ only horizontally-adjacent neighboring quantization cells may be considered, when classifying $v_i$ into class A, class B or class C. For determining $a_{i,y}$ only vertically-adjacent neighboring cells may be considered when classifying $v_i$ into class A, class B or class C. For determining $a_{i,z}$ only indepth-adjacent neighboring cells may be considered.

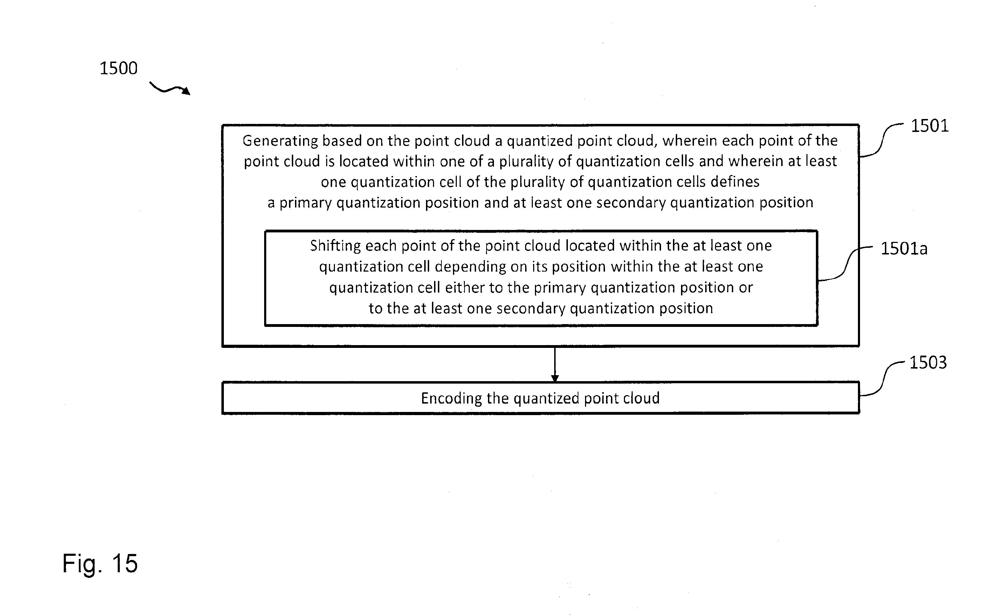

Figure 15 is a flow diagram illustrating an encoding method 1500 for compression of the point cloud 100 in a multi-dimensional space. The encoding method 1500 comprises the steps of:

generating 1501 based on the point cloud 100 a quantized point cloud, wherein each point 101 of the point cloud 100 is located within one of a plurality of quantization cells 810a-p partitioning the multi-dimensional space and wherein at least one quantization cell 810k of the plurality of quantization cells 810a-p defines a primary quantization position 800 and at least one secondary quantization position 801a-d, wherein generating 1501 the quantized point cloud comprises shifting 1501a each point 101 of the point cloud 100 located within the at least one quantization cell 810k depending on its position within the at least one quantization cell 810k either to the primary quantization position 800 or to the at least one secondary quantization position 801a-d; and

encoding 1503 the quantized point cloud.

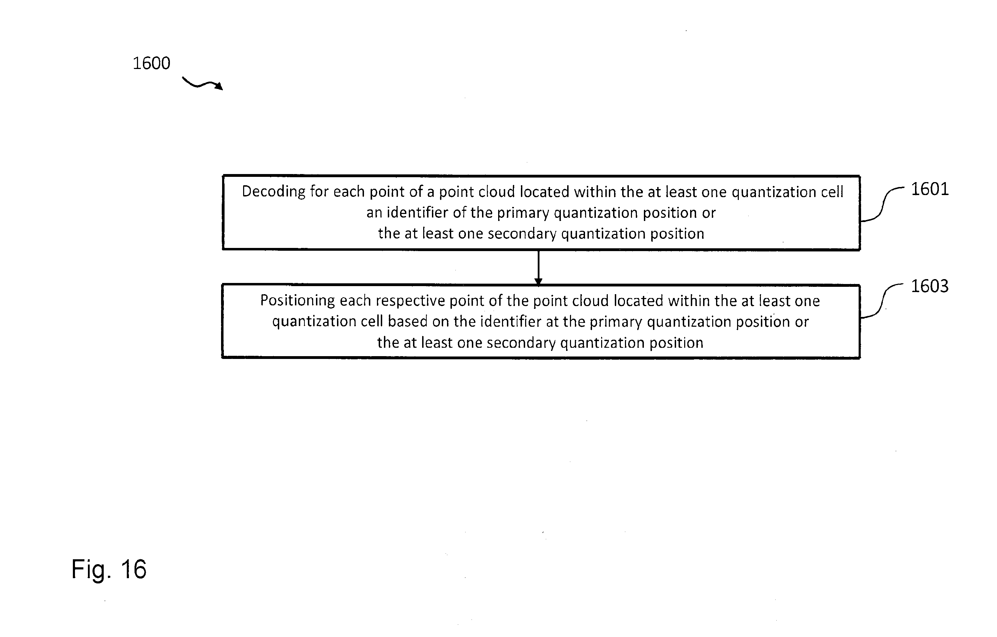

Figure 16 is a flow diagram illustrating a decoding method 1600 for decompression of the bitstream 120 into the reconstructed point cloud 100' in a multi-dimensional space, wherein the multi-dimensional space is partitioned into a plurality of quantization cells 810a-p and wherein at least one quantization cell 810k of the plurality of quantization cells 810a-p defines a primary quantization position 800 and at least one secondary quantization position 801a-d. The decoding method 1600 comprises the steps of:

decoding 1601 for each point 101' of the point cloud 100' located within the at least one quantization cell 810k an identifier of the primary quantization position 800 or the at least one secondary quantization position 801a-d; and

positioning 1603 each respective point 101' of the point cloud 100' located within the at least one quantization cell 810k based on the identifier at the primary quantization position 800 or the at least one secondary quantization position 801a-d.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. An encoding apparatus (110) for compression of a point cloud (100) in a multi-dimensional space, wherein the encoding apparatus (110) comprises:

a processing circuitry (111) configured to generate based on the point cloud (100) a quantized point cloud, wherein each point (101) of the point cloud (100) is located within one of a plurality of quantization cells (810a-p) partitioning the multi-dimensional space and wherein at least one quantization cell (810k) of the plurality of quantization cells (810a-p) defines a primary quantization position (800) and at least one secondary quantization position (801a-d), wherein the processing circuitry (111) is configured to generate the quantized point cloud by shifting each point (101) of the point cloud (100) located within the at least one quantization cell (810k) depending on its position within the at least one quantization cell (810k) either to the primary quantization position (800) or to the at least one secondary quantization position (801a-d);

**characterized in that**

the primary quantization position (800) is a central primary reference position, and when shifting a point (101) of the point cloud (100) located within the at least one quantization cell (810k) to the primary quantization position (800) within the at least one quantization cell (810k), signaling only a value 0 of an MPM flag; and

when shifting a point (101) of the point cloud (100) located within the at least one quantization cell (810k) to one of the at least one secondary quantization position (801a-d) within the at least one quantization cell (810k), signaling a value 1 of the MPM flag and a fixed length code identifying one of the at least one secondary quantization position (801a-d);

wherein the processing circuitry (111) is further configured to encode the quantized point cloud.

2. The encoding apparatus (110) of claim 1, wherein the processing circuitry (111) is configured to shift each point (101) of the point cloud (100) located within the at least one quantization cell (810k) either to the primary quantization position (800) or to the at least one secondary quantization position (801a-d) depending on its distance to the primary quantization position (800) and its distance to the at least one secondary quantization position (801a-d).

3. The encoding apparatus (110) of claim 1 or 2, wherein the processing circuitry (111) is configured to partition the multi-dimensional space into the plurality of quantization cells (810a-p).

4. The encoding apparatus (110) of any one of the preceding claims, wherein the primary quantization position (800) is located at a geometric center of the quantization cell (810k).

5. The encoding apparatus (110) of any one of the preceding claims, wherein the processing circuitry (111) is configured to encode the quantized point cloud by encoding respectively the identifier of the at least one secondary quantization position (800,801a-d) each point (101) of the point cloud (100) located within the at least one quantization cell (810k) is shifted to; and

wherein, for example, the processing circuitry (111) is configured to encode the at least one secondary quantization position (801a-d) using a fixed-length code.

6. The encoding apparatus (110) of any one of the preceding claims, wherein the multi-dimensional space is a 2D space and the at least one quantization cell (810k) has a square shape.

7. The encoding apparatus (110) of claim 6, wherein a distance d of the one or more secondary quantization positions (801a-d) from the primary quantization position (800) projected onto one of the sides of the at least one quantization cell (810k) is in the range $0.9 \cdot d_0 \leq d \leq 1.1 \cdot d_0$ with

$$d_0 = S \cdot \frac{(\sqrt{5}+1)}{5\sqrt{5}},$$

wherein S denotes a side length of the at least one quantization cell (810k).

8. The encoding apparatus (110) of claim 6 or 7, wherein at least one of the one or more secondary quantization positions (801a-d) is located on a diagonal (803a-d) of the at least one quantization cell (810k) in a respective quadrant of the at least one quantization cell (810k); or

wherein the distance of the one or more secondary quantization positions (801a-d) from the primary quantization position (800) depends on one or more of the following conditions: (i) whether a neighboring quantization cell (810a-p) comprises a point of the point cloud that already has been encoded or not; and (ii) whether a neighboring quantization cell (810a-p) has already been encoded.

9. The encoding apparatus (110) of claim 8, wherein at least one of the one or more secondary quantization positions (801a-d) is displaced by a displacement vector (805a,d) from a position located on a diagonal (803a-d) of the at least one quantization cell (810k) in a respective quadrant of the at least one quantization cell (810k); and wherein, for example, the displacement vector (805a,d) depends on one or more of the following conditions: (i) whether a neighboring quantization cell (810a-p) comprises a point of the point cloud that already has been encoded or not; and (ii) whether a neighboring quantization cell (810a-p) has already been encoded.

10. The encoding apparatus (110) of any one of claims 1 to 5, wherein the multi-dimensional space is a 3D space and wherein the at least one quantization cell (810k) has a cube shape; and wherein, for example, at least one of the one or more secondary quantization positions (801a) is located on a diagonal (803a) of the at least one quantization cell (810k) in a respective octant of the at least one quantization cell (810k).

11. The encoding apparatus (110) of any one of the preceding claims, wherein the one or more secondary quantization positions (801a-d) comprise a first secondary quantization position (801a-d) having a first distance from the primary quantization position (800) and a second secondary quantization position (801a-d) having a second distance from the primary quantization position (800), wherein the first distance and the second distance are unequal.

12. An encoding method (1500) for compression of a point cloud (100) in a multi-dimensional space, wherein the encoding method (1500) comprises:

generating (1501) based on the point cloud (100) a quantized point cloud, wherein each point (101) of the point cloud (100) is located within one of a plurality of quantization cells (810a-p) partitioning the multi-dimensional space and wherein at least one quantization cell (810k) of the plurality of quantization cells (810a-p) defines a primary quantization position (800) and at least one secondary quantization position (801a-d), wherein generating (1501) the quantized point cloud comprises shifting (1501a) each point (101) of the point cloud (100) located within the at least one quantization cell (810k) depending on its position within the at least one quantization cell (810k) either to the primary quantization position (800) or to the at least one secondary quantization position (801a-d); and
encoding (1503) the quantized point cloud,
**characterized in that**
the primary quantization position (800) is a central primary reference position, and when shifting a point (101) of the point cloud (100) located within the at least one quantization cell (810k) to the primary quantization position (800) within the at least one quantization cell (810k), signaling only a value 0 of an MPM flag;
when shifting a point (101) of the point cloud (100) located within the at least one quantization cell (810k) to one of the at least one secondary quantization position (801a-d) within the at least one quantization cell (810k), signaling a value 1 of the MPM flag and a fixed length code identifying one of the at least one secondary quantization position (801a-d).

13. A decoding apparatus (130) for decompression of a bitstream (120) into a point cloud (100') in a multi-dimensional space, wherein the multi-dimensional space is partitioned into a plurality of quantization cells (810a-p) and wherein at least one quantization cell (810k) of the plurality of quantization cells (810a-p) defines a primary quantization position (800) and at least one secondary quantization position (801a-d), **characterized in that**
the primary quantization position (800) is a central primary reference position; wherein the decoding apparatus (130) comprises:
a processing circuitry (131) configured to decode for each point (101') of the point cloud (100') located within the at least one quantization cell (810k) an identifier of the primary quantization position (800) or the at least one secondary quantization position (801a-d), wherein a value of the identifier of the primary quantization position (800) is 0, and a value of the identifier of the at least one secondary quantization position (801a-d) is indicated by 1 followed by a fixed-length code, FLC:
wherein the processing circuitry (131) is further configured to position each respective point (101') of the point cloud (100') located within the at least one quantization cell (810k) based on the identifier at the primary quantization position (800) or the at least one secondary quantization position (801a-d).

14. A decoding method (1600) for decompression of a bitstream (120) into a point cloud (100') in a multi-dimensional space, wherein the multi-dimensional space is partitioned into a plurality of quantization cells (810a-p) and wherein at least one quantization cell (810k) of the plurality of quantization cells (810a-p) defines a primary quantization position (800) and at least one secondary quantization position (801a-d), **characterized in that**
the primary quantization position (800) is a central primary reference position; wherein the decoding method (1600) comprises:

decoding (1601) for each point (101') of the point cloud (100') located within the at least one quantization cell (810k) an identifier of the primary quantization position (800) or the at least one secondary quantization position (801a-d), wherein a value of the identifier of the primary quantization position (800) is 0, and a value of the identifier of the at least one secondary quantization position (801a-d) is indicated by 1 followed by a fixed-length code, FLC; and

positioning (1603) each respective point (101') of the point cloud (100') located within the at least one quantization cell (810k) based on the identifier at the primary quantization position (800) or the at least one secondary quantization position (801a-d).

15. A computer program product comprising a non-transitory computer-readable storage medium for storing program code which causes a computer or a processor to perform the method (1500) of claim 12 or the method (1600) of claim 14 when the program code is executed by the computer or the processor.

**Patentansprüche**

1. Codiervorrichtung (110) zur Komprimierung einer Punktwolke (100) in einem mehrdimensionalen Raum, wobei die Codiervorrichtung (110) umfasst:

eine Verarbeitungsschaltlogik (111), die zum Erzeugen, basierend auf der Punktwolke (100), einer quantisierten Punktwolke ausgelegt ist, wobei sich jeder Punkt (101) der Punktwolke (100) innerhalb einer einer Vielzahl von Quantisierungszellen (810a-p), die den mehrdimensionalen Raum partitionieren, befindet und wobei zumindest eine Quantisierungszelle (810k) der Vielzahl von Quantisierungszellen (810a-p) eine primäre Quantisierungsposition (800) und zumindest eine sekundäre Quantisierungsposition (801a-d) definiert, wobei die Verarbeitungsschaltlogik (111) zum Erzeugen der quantisierten Punktwolke durch Verschieben jedes Punkts (101) der Punktwolke (100), die sich innerhalb der zumindest einen Quantisierungszelle (810k) befindet, je nach ihrer Position innerhalb der zumindest einen Quantisierungszelle (810k) entweder an die primäre Quantisierungsposition (800) oder an die zumindest eine sekundäre Quantisierungsposition (801a-d) ausgelegt ist;
**dadurch gekennzeichnet, dass**
die primäre Quantisierungsposition (800) eine zentrale primäre Referenzposition ist, und wenn ein Punkt (101) der Punktwolke (100), die sich innerhalb der zumindest einen Quantisierungszelle (810k) befindet, an die primäre Quantisierungsposition (800) innerhalb der zumindest einen Quantisierungszelle (810k) verschoben wird, Signalisieren nur eines Werts 0 eines MPM-Flags; und
wenn ein Punkt (101) der Punktwolke (100), die sich innerhalb der zumindest einen Quantisierungszelle (810k) befindet, an eine der zumindest einen sekundären Quantisierungsposition (801a-d) innerhalb der zumindest einen Quantisierungszelle (810k) verschoben wird, Signalisieren eines Werts 1 des MPM-Flags und eines Codes mit fester Länge, der eine der zumindest einen sekundären Quantisierungsposition (801a-d) identifiziert;
wobei die Verarbeitungsschaltlogik (111) ferner zum Codieren der quantisierten Punktwolke ausgelegt ist.

2. Codiervorrichtung (110) nach Anspruch 1, wobei die Verarbeitungsschaltlogik (111) zum Verschieben jedes Punkts (101) der Punktwolke (100), die sich innerhalb der zumindest einen Quantisierungszelle (810k) befindet, entweder an die primäre Quantisierungsposition (800) oder an die zumindest eine sekundäre Quantisierungsposition (801a-d) je nach ihrem Abstand zu der primären Quantisierungsposition (800) und ihrem Abstand zu der zumindest einen sekundären Quantisierungsposition (801a-d) ausgelegt ist.

3. Codiervorrichtung (110) nach Anspruch 1 oder 2, wobei die Verarbeitungsschaltlogik (111) zum Partitionieren des mehrdimensionalen Raums in die Vielzahl von Quantisierungszellen (810a-p) ausgelegt ist.

4. Codiervorrichtung (110) nach einem der vorhergehenden Ansprüche, wobei sich die primäre Quantisierungsposition (800) an einem geometrischen Zentrum der Quantisierungszelle (810k) befindet.

5. Codiervorrichtung (110) nach einem der vorhergehenden Ansprüche, wobei die Verarbeitungsschaltlogik (111) zum Codieren der quantisierten Punktwolke durch Codieren jeweils des Identifikators der zumindest einen sekundären Quantisierungsposition (800, 801a-d), an die jeder Punkt (101) der Punktwolke (100), die sich innerhalb der zumindest einen Quantisierungszelle (810k) befindet, verschoben wird, ausgelegt ist; und
wobei zum Beispiel die Verarbeitungsschaltlogik (111) zum Codieren der zumindest einen sekundären Quantisierungsposition (801a-d) unter Verwendung eines Codes mit fester Länge ausgelegt ist.

6. Codiervorrichtung (110) nach einem der vorhergehenden Ansprüche, wobei der mehrdimensionale Raum ein 2D-Raum ist und die zumindest eine Quantisierungszelle (810k) eine Quadratform aufweist.

7. Codiervorrichtung (110) nach Anspruch 6, wobei ein Abstand d der einen oder der mehreren sekundären Quantisierungspositionen (801a-d) von der primären Quantisierungsposition (800) projiziert auf eine der Seiten der zumindest einen Quantisierungszelle (810k) im Bereich von $0{,}9 \cdot d_0 \leq d \leq 1{,}1 \cdot d_0$ ist, wobei $d_o = S \cdot \frac{(\sqrt{5}+1)}{5\sqrt{5}}$ , wobei S eine Seitenlänge der zumindest einen Quantisierungszelle (810k) bezeichnet.

8. Codiervorrichtung (110) nach Anspruch 6 oder 7, wobei sich zumindest eine der einen oder der mehreren sekundären Quantisierungspositionen (801a-d) auf einer Diagonalen (803a-d) der zumindest einen Quantisierungszelle (810k) in einem jeweiligen Quadranten der zumindest einen Quantisierungszelle (810k) befindet; oder wobei der Abstand der einen oder der mehreren sekundären Quantisierungspositionen (801a-d) von der primären Quantisierungsposition (800) von einer oder mehreren der folgenden Bedingungen abhängt: (i) ob eine benachbarte Quantisierungszelle (810a-p) einen Punkt der Punktwolke, der bereits codiert wurde, umfasst oder nicht; und (ii) ob eine benachbarte Quantisierungszelle (810a-p) bereits codiert wurde.

9. Codiervorrichtung (110) nach Anspruch 8, wobei zumindest eine der einen oder der mehreren sekundären Quantisierungspositionen (801a-d) durch einen Verschiebungsvektor (805a,d) von einer Position, die sich auf einer Diagonalen (803a-d) der zumindest einen Quantisierungszelle (810k) in einem jeweiligen Quadranten der zumindest einen Quantisierungszelle (810k) befindet, verschoben wird und wobei zum Beispiel der Verschiebungsvektor (805a,d) von einer oder mehreren der folgenden Bedingungen abhängt: (i) ob eine benachbarte Quantisierungszelle (810a-p) einen Punkt der Punktwolke, der bereits codiert wurde, umfasst oder nicht; und (ii) ob eine benachbarte Quantisierungszelle (810a-p) bereits codiert wurde.

10. Codiervorrichtung (110) nach einem der Ansprüche 1 bis 5, wobei der mehrdimensionale Raum ein 3D-Raum ist und wobei die zumindest eine Quantisierungszelle (810k) eine Würfelform aufweist und wobei sich zum Beispiel zumindest eine der einen oder der mehreren sekundären Quantisierungspositionen (801a) auf einer Diagonalen (803a) der zumindest einen Quantisierungszelle (810k) in einem jeweiligen Oktanten der zumindest einen Quantisierungszelle (810k) befindet.

11. Codiervorrichtung (110) nach einem der vorhergehenden Ansprüche, wobei die eine oder die mehreren sekundären Quantisierungspositionen (801a-d) eine erste sekundäre Quantisierungsposition (801a-d) mit einem ersten Abstand von der primären Quantisierungsposition (800) und eine zweite sekundäre Quantisierungsposition (801a-d) mit einem zweiten Abstand von der primären Quantisierungsposition (800), wobei der erste Abstand und der zweite Abstand ungleich sind, umfassen.

12. Codierverfahren (1500) zur Komprimierung einer Punktwolke (100) in einem mehrdimensionalen Raum, wobei das Codierverfahren (1500) umfasst:

Erzeugen (1501), basierend auf der Punktwolke (100), einer quantisierten Punktwolke, wobei sich jeder Punkt (101) der Punktwolke (100) innerhalb einer einer Vielzahl von Quantisierungszellen (810a-p), die den mehrdimensionalen Raum partitionieren, befindet und wobei zumindest eine Quantisierungszelle (810k) der Vielzahl von Quantisierungszellen (810a-p) eine primäre Quantisierungsposition (800) und zumindest eine sekundäre Quantisierungsposition (801a-d) definiert, wobei das Erzeugen (1501) der quantisierten Punktwolke ein Verschieben (1501a) jedes Punkts (101) der Punktwolke (100), die sich innerhalb der zumindest einen Quantisierungszelle (810k) befindet, je nach ihrer Position innerhalb der zumindest einen Quantisierungszelle (810k) entweder an die primäre Quantisierungsposition (800) oder an die zumindest eine sekundäre Quantisierungsposition (801a-d) umfasst; und
Codieren (1503) der quantisierten Punktwolke,
**dadurch gekennzeichnet, dass**
die primäre Quantisierungsposition (800) eine zentrale primäre Referenzposition ist, und wenn ein Punkt (101) der Punktwolke (100), die sich innerhalb der zumindest einen Quantisierungszelle (810k) befindet, an die primäre Quantisierungsposition (800) innerhalb der zumindest einen Quantisierungszelle (810k) verschoben wird, Signalisieren nur eines Werts 0 eines MPM-Flags;
wenn ein Punkt (101) der Punktwolke (100), die sich innerhalb der zumindest einen Quantisierungszelle (810k) befindet, an eine der zumindest einen sekundären Quantisierungsposition (801a-d) innerhalb der zumindest einen Quantisierungszelle (810k) verschoben wird, Signalisieren eines Werts 1 des MPM-Flags und eines Codes mit fester Länge, der eine der zumindest einen sekundären Quantisierungsposition (801a-d) identifiziert.

13. Decodiervorrichtung (130) zur Dekomprimierung eines Bit-Stroms (120) in eine Punktwolke (100') in einem mehrdimensionalen Raum, wobei der mehrdimensionale Raum in eine Vielzahl von Quantisierungszellen (810a-p) partitioniert wird und wobei zumindest eine Quantisierungszelle (810k) der Vielzahl von Quantisierungszellen (810a-p) eine primäre Quantisierungsposition (800) und zumindest eine sekundäre Quantisierungsposition (801a-d) definiert,
**dadurch gekennzeichnet, dass**
die primäre Quantisierungsposition (800) eine zentrale primäre Referenzposition ist; wobei die Decodiervorrichtung (130) umfasst:

eine Verarbeitungsschaltlogik (131), die zum Decodieren für jeden Punkt (101') der Punktwolke (100'), die sich innerhalb der zumindest einen Quantisierungszelle (810k) befindet, eines Identifikators der primären Quantisierungsposition (800) oder der zumindest einen sekundären Quantisierungsposition (801a-d) ausgelegt ist, wobei ein Wert des Identifikators der primären Quantisierungsposition (800) 0 ist und ein Wert des Identifikators der zumindest einen sekundären Quantisierungsposition (801a-d) durch 1 gefolgt von einem Code mit fester Länge, FLC, angegeben wird;
wobei die Verarbeitungsschaltlogik (131) ferner zum Positionieren jedes jeweiligen Punkts (101') der Punktwolke (100'), die sich innerhalb der zumindest einen Quantisierungszelle (810k) befindet, basierend auf dem Identifikator an der primären Quantisierungsposition (800) oder der zumindest einen sekundären Quantisierungsposition (801a-d) ausgelegt ist.

14. Decodierverfahren (1600) zur Dekomprimierung eines Bit-Stroms (120) in eine Punktwolke (100') in einem mehrdimensionalen Raum, wobei der mehrdimensionale Raum in eine Vielzahl von Quantisierungszellen (810a-p) partitioniert wird und wobei zumindest eine Quantisierungszelle (810k) der Vielzahl von Quantisierungszellen (810a-p) eine primäre Quantisierungsposition (800) und zumindest eine sekundäre Quantisierungsposition (801a-d) definiert,
**dadurch gekennzeichnet, dass**
die primäre Quantisierungsposition (800) eine zentrale primäre Referenzposition ist; wobei das Decodierverfahren (1600) umfasst:

Decodieren (1601) für jeden Punkt (101') der Punktwolke (100'), die sich innerhalb der zumindest einen Quantisierungszelle (810k) befindet, eines Identifikators der primären Quantisierungsposition (800) oder der zumindest einen sekundären Quantisierungsposition (801a-d), wobei ein Wert des Identifikators der primären Quantisierungsposition (800) 0 ist und ein Wert des Identifikators der zumindest einen sekundären Quantisierungsposition (801a-d) durch 1 gefolgt von einem Code mit fester Länge, FLC, angegeben wird; und
Positionieren (1603) jedes jeweiligen Punkts (101') der Punktwolke (100'), die sich innerhalb der zumindest einen Quantisierungszelle (810k) befindet, basierend auf dem Identifikator an der primären Quantisierungsposition (800) oder der zumindest einen sekundären Quantisierungsposition (801a-d).

15. Computerprogrammprodukt, das ein nicht-flüchtiges computerlesbares Speicherungsmedium zum Speichern von Programmcode umfasst, der einen Computer oder einen Prozessor zum Durchführen des Verfahrens (1500) nach Anspruch 12 oder des Verfahrens (1600) nach Anspruch 14 veranlasst, wenn der Programmcode durch den Computer oder den Prozessor ausgeführt wird.

**Revendications**

1. Appareil de codage (110) pour la compression d'un nuage de points (100) dans un espace multi-dimensionnel, l'appareil de codage (110) comprenant :

des circuits de traitement (111) configurés pour générer sur la base du nuage de points (100) un nuage de points quantifié, dans lequel chaque point (101) du nuage de points (100) est situé à l'intérieur de l'une d'une pluralité de cellules de quantification (810a-p) séparant l'espace multi-dimensionnel et dans lequel au moins une cellule de quantification (810k) de la pluralité de cellules de quantification (810a-p) définit une position de quantification primaire (800) et au moins une position de quantification secondaire (801a-d), dans lequel les circuits de traitement (111) sont configurés pour générer le nuage de points quantifié en décalant chaque point (101) du nuage de points (100) situé à l'intérieur de la ou des cellules de quantification (810k) en fonction de sa position à l'intérieur de la ou des cellules de quantification (810k) soit vers la position de quantification primaire (800), soit vers la ou les positions de quantification secondaires (801a-d) ;

**caractérisé en ce que**

la position de quantification primaire (800) est une position de référence primaire centrale, et lors du décalage d'un point (101) du nuage de points (100) situé à l'intérieur de la ou des cellules de quantification (810k) vers la position de quantification primaire (800) à l'intérieur de la ou des cellules de quantification (810k), la signalisation uniquement d'une valeur 0 d'un indicateur MPM ; et

lors du décalage d'un point (101) du nuage de points (100) situé à l'intérieur de la ou des cellules de quantification (810k) vers l'une de la ou des positions de quantification secondaires (801a-d) à l'intérieur de la ou des cellules de quantification (810k), la signalisation d'une valeur 1 de l'indicateur MPM et d'un code de longueur fixe identifiant l'une de la ou des positions de quantification secondaires (801a-d) ;

dans lequel les circuits de traitement (111) sont en outre configurés pour coder le nuage de points quantifié.

2. Appareil de codage (110) selon la revendication 1, dans lequel les circuits de traitement (111) sont configurés pour décaler chaque point (101) du nuage de points (100) situé à l'intérieur de la ou des cellules de quantification (810k) soit vers la position de quantification primaire (800), soit vers la ou les positions de quantification secondaires (801a-d) en fonction de sa distance à la position de quantification primaire (800) et de sa distance à la ou aux positions de quantification secondaires (801a-d).

3. Appareil de codage (110) selon la revendication 1 ou 2, dans lequel les circuits de traitement (111) sont configurés pour séparer l'espace multi-dimensionnel en la pluralité de cellules de quantification (810a-p).

4. Appareil de codage (110) selon l'une quelconque des revendications précédentes, dans lequel la position de quantification primaire (800) est située à un centre géométrique de la cellule de quantification (810k).

5. Appareil de codage (110) selon l'une quelconque des revendications précédentes, dans lequel les circuits de traitement (111) sont configurés pour coder le nuage de points quantifié par codage respectif de l'identifiant de la ou des positions de quantification secondaires (800, 801a-d) vers laquelle chaque point (101) du nuage de points (100) situé à l'intérieur de la ou des cellules de quantification (810k) est décalé ; et

dans lequel par exemple, les circuits de traitement (111) sont configurés pour coder la ou les positions de quantification secondaires (801a-d) à l'aide d'un code de longueur fixe.

6. Appareil de codage (110) selon l'une quelconque des revendications précédentes, dans lequel l'espace multi-dimensionnel est un espace en 2D et la ou les cellules de quantification (810k) présentent une forme carrée.

7. Appareil de codage (110) selon la revendication 6, dans lequel une distance d de la ou des positions de quantification secondaires (801a-d) par rapport à la position de quantification primaire (800) projetée sur l'un des côtés de la ou des cellules de quantification (810k) se trouve dans la plage $0,9 \cdot d_0 \le d \le 1,1 \cdot d_0$ avec

$$d_0 = S \cdot \frac{\sqrt{5}+1}{5\sqrt{5}}$$

dans lequel S indique une longueur latérale de la ou des cellules de quantification (810k).

8. Appareil de codage (110) selon la revendication 6 ou 7, dans lequel au moins l'une parmi la ou les positions de quantification secondaires (801a-d) sont situées sur une diagonale (803a-d) de la ou des cellules de quantification (810k) dans un quadrant respectif de la ou des cellules de quantification (810k) ; ou

dans lequel la distance de la ou des positions de quantification secondaires (801a-d) par rapport à la position de quantification primaire (800) dépend d'une ou plusieurs des conditions suivantes : (i) si une cellule de quantification voisine (810a-p) comprend ou non un point du nuage de points qui a déjà été codé ; et (ii) si une cellule de quantification voisine (810a-p) a déjà été codée.

9. Appareil de codage (110) selon la revendication 8, dans lequel au moins l'une de la ou des positions de quantification secondaires (801a-d) est déplacée par un vecteur de déplacement (805a, d) d'une position située sur une diagonale (803a-d) de la ou des cellules de quantification (810k) dans un quadrant respectif de la ou des cellules de quantification (810k) ; et dans lequel par exemple, le vecteur de déplacement (805a-d) dépend d'une ou plusieurs des conditions suivantes : (i) si une cellule de quantification voisine (810a-p) comprend ou non un point du nuage de points qui a déjà été codé ; et (ii) si une cellule de quantification voisine (810a-p) a déjà été codée.

10. Appareil de codage (110) selon l'une quelconque des revendications 1 à 5, dans lequel l'espace multi-dimensionnel est un espace en 3D et dans lequel la ou les cellules de quantification (810k) présentent une forme de cube ; et dans lequel par exemple, au moins l'une de la ou des positions de quantification secondaires (801a) est située sur une diagonale (803a) de la ou des cellules de quantification (810k) dans un octant respectif de la ou des cellules de quantification (810k).

11. Appareil de codage (110) selon l'une quelconque des revendications précédentes, dans lequel la ou les positions de quantification secondaires (801a-d) comprennent une première position de quantification secondaire (801a-d) ayant une première distance par rapport à la position de quantification primaire (800) et une seconde position de quantification secondaire (801a-d) ayant une seconde distance par rapport à la position de quantification primaire (800), dans lequel la première distance et la seconde distance ne sont pas égales.

12. Procédé de codage (1500) pour la compression d'un nuage de points (100) dans un espace multi-dimensionnel, le procédé de codage (1500) comprenant :

la génération (1501) sur la base du nuage de points (100) d'un nuage de points quantifié, dans lequel chaque point (101) du nuage de points (100) est situé à l'intérieur de l'une d'une pluralité de cellules de quantification (810a-p) séparant l'espace multi-dimensionnel et dans lequel au moins une cellule de quantification (810k) de la pluralité de cellules de quantification (810a-p) définit une position de quantification primaire (800) et au moins une position de quantification secondaire (801a-d), dans lequel la génération (1501) du nuage de points quantifié comprend le décalage (1501a) de chaque point (101) du nuage de points (100) situé à l'intérieur de la ou des cellules de quantification (810k) en fonction de sa position à l'intérieur de la ou des cellules de quantification (810k) soit vers la position de quantification primaire (800), soit vers la ou les positions de quantification secondaires (801a-d) ; et
le codage (1503) du nuage de points quantifié,
**caractérisé en ce que**
la position de quantification primaire (800) est une position de référence primaire centrale, et lors du décalage d'un point (101) du nuage de points (100) situé à l'intérieur de la ou des cellules de quantification (810k) vers la position de quantification primaire (800) à l'intérieur de la ou des cellules de quantification (810k), la signalisation uniquement d'une valeur 0 d'un indicateur MPM ; et
lors du décalage d'un point (101) du nuage de points (100) situé à l'intérieur de la ou des cellules de quantification (810k) vers l'une de la ou des positions de quantification secondaires (801a-d) à l'intérieur de la ou des cellules de quantification (810k), la signalisation d'une valeur 1 de l'indicateur MPM et d'un code de longueur fixe identifiant l'une de la ou des positions de quantification secondaires (801a-d).

13. Appareil de décodage (130) pour la décompression d'un train de bits (120) en un nuage de points (100') dans un espace multi-dimensionnel, dans lequel l'espace multi-dimensionnel est séparé en une pluralité de cellules de quantification (810a-p) et dans lequel au moins une cellule de quantification (810k) de la pluralité de cellules de quantification (810a-p) définit une position de quantification primaire (800) et au moins une position de quantification secondaire (801a-d),

**caractérisé en ce que**
la position de quantification primaire (800) est une position de référence primaire centrale ; dans lequel l'appareil de décodage (130) comprend :

des circuits de traitement (131) configurés pour décoder pour chaque point (101') du nuage de points (100') situé à l'intérieur de la ou des cellules de quantification (810k) un identifiant de la position de quantification primaire (800) ou de la ou des positions de quantification secondaires (801a-d), dans lequel une valeur de l'identifiant de la position de quantification primaire (800) est 0, et une valeur de l'identifiant de la ou des positions de quantification secondaires (801a-d) est indiquée par 1 suivi d'un code de longueur fixe, FLC ; dans lequel les circuits de traitement (131) sont en outre configurés pour positionner chaque point respectif (101') du nuage de points (100') situé à l'intérieur de la ou des cellules de quantification (810k) sur la base de l'identifiant à la position de quantification primaire (800) ou à la ou aux positions de quantification secondaires (801a-d).

14. Procédé de décodage (1600) pour la décompression d'un train de bits (120) en un nuage de points (100') dans un espace multi-dimensionnel, dans lequel l'espace multi-dimensionnel est séparé en une pluralité de cellules de quantification (810a-p) et dans lequel au moins une cellule de quantification (810k) de la pluralité de cellules de quantification (810a-p) définit une position de quantification primaire (800) et au moins une position de quantification secondaire (801a-d),

   **caractérisé en ce que**
   la position de quantification primaire (800) est une position de référence primaire centrale ; dans lequel le procédé de décodage (1600) comprend :

   le décodage (1601) pour chaque point (101') du nuage de points (100') situé à l'intérieur de la ou des cellules de quantification (810k) d'un identifiant de la position de quantification primaire (800) ou de la ou des positions de quantification secondaires (801a-d), dans lequel une valeur de l'identifiant de la position de quantification primaire (800) est 0, et une valeur de l'identifiant de la ou des positions de quantification secondaires (801a-d) est indiquée par 1 suivi d'un code de longueur fixe, FLC ; et
   le positionnement (1603) de chaque point respectif (101') du nuage de points (100') situé à l'intérieur de la ou des cellules de quantification (910k) sur la base de l'identifiant à la position de quantification primaire (800) ou à la ou aux positions de quantification secondaires (801a-d).

15. Produit programme informatique comprenant un support de stockage non transitoire lisible par ordinateur destiné à stocker un code de programme qui amène un ordinateur ou un processeur à exécuter le procédé (1500) selon la revendication 12 ou le procédé (1600) selon la revendication 14 lorsque le code de programme est exécuté par l'ordinateur ou le processeur.

Fig. 1

Fig. 2

Fig. 3

EP 4 233 006 B1

Fig. 4

Fig. 5

Fig. 6

O secondary quantization positions

● center of a cell (primary quantization position)

Fig. 7

Fig. 8

Fig. 9

EP 4 233 006 B1

Bitstream → **Decode parameters** — 1011

↓

**Decode histogram counts** — 1013

↓

**Decode histogram map** — 1015

↓

**Decode candIndex for each point** — 1017

↓

**Restore points** → Decoded points

1019

Fig. 10

$$d = (d_x, d_y, d_z)$$

Fig. 11

Cell shape → **Determine positions of cells' vertices** ⟍ 1201

↓

**Calculate volume of a cell** ⟍ 1203

↓

**Determine a scaling factor** ⟍ 1205

↓

1207 ⟍ **Apply scaling factor on cells' vertices** → Additional reconstructed positions

Fig. 12

Fig. 13

Fig. 14

EP 4 233 006 B1

1500

Generating based on the point cloud a quantized point cloud, wherein each point of the point cloud is located within one of a plurality of quantization cells and wherein at least one quantization cell of the plurality of quantization cells defines a primary quantization position and at least one secondary quantization position — 1501

Shifting each point of the point cloud located within the at least one quantization cell depending on its position within the at least one quantization cell either to the primary quantization position or to the at least one secondary quantization position — 1501a

Encoding the quantized point cloud — 1503

Fig. 15

1600

Decoding for each point of a point cloud located within the at least one quantization cell an identifier of the primary quantization position or the at least one secondary quantization position — 1601

Positioning each respective point of the point cloud located within the at least one quantization cell based on the identifier at the primary quantization position or the at least one secondary quantization position — 1603

Fig. 16